(19) Europäisches Patentamt
European Patent Office
Office européen des brevets

(11) EP 2 928 119 B1

(12) EUROPEAN PATENT SPECIFICATION

(45) Date of publication and mention
of the grant of the patent:
01.08.2018 Bulletin 2018/31

(51) Int Cl.:
*H04L 12/24* (2006.01)     *H04L 12/26* (2006.01)

(21) Application number: 15161299.1

(22) Date of filing: 27.03.2015

(54) **Method and system for monitoring and analysing a telecommunication transport network**

Verfahren und System zur Überwachung und Analyse eines Telekommunikationstransportnetzwerkes

Procédé et système de surveillance et analyse d'un réseau de transport de télécommunication

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 01.04.2014 IT MI20140566

(43) Date of publication of application:
07.10.2015 Bulletin 2015/41

(73) Proprietor: **SIAE Microelettronica S.p.A.**
**20124 Milano (IT)**

(72) Inventors:
• **Sartori, Cristian**
**20124 Milano (IT)**
• **Zanzottera, Giuseppe**
**20124 Milano (IT)**

(74) Representative: **Raimondi, Margherita**
**Dott. Ing. Prof. Alfredo Raimondi S.r.l.**
**Piazzale le Cadorna, 15**
**20123 Milano (IT)**

(56) References cited:
EP-A1- 1 819 096     WO-A1-2014/008915
WO-A2-01/89141     WO-A2-02/15481

• ZERE GHEBRETENSAE ET AL: "Mobile broadband backhaul network migration from TDM to carrier ethernet", IEEE COMMUNICATIONS MAGAZINE, IEEE SERVICE CENTER, PISCATAWAY, US, vol. 48, no. 10, 1 October 2010 (2010-10-01), pages 102-109, XP011319413, ISSN: 0163-6804
• "Transmission and Multiplexing (TM); Digital Radio Relay Systems (DRRS); Synchronous Digital Hierarchy (SDH); System performance monitoring parameters of SDH DRRS; EN 301 129", IEEE, LIS, SOPHIA ANTIPOLIS CEDEX, FRANCE, vol. TM-4, no. V1.1.2, 1 May 1999 (1999-05-01), XP014002798, ISSN: 0000-0001
• MR V M MINKIN CHAIRPERSON: "Recommendations F.750-4 and F.1332-1 from ITU-R SG9; TD 6", ITU-T DRAFT STUDY PERIOD 2001-2004, INTERNATIONAL TELECOMMUNICATION UNION, GENEVA ; CH, vol. STUDY GROUP 15, 5 February 2001 (2001-02-05), pages 1-117, XP017426840,

**Description**

The present invention relates to a method and an associated system for monitoring and analysing transport networks for telecommunications.

It is known, in the technical sector of telecommunication networks, that the networks may be functionally and structurally divided into the following:

-) Access networks, intended to provide a connection between the access point/location of the single end users and the first switching station, or generally the termination point of the transport network.

-) A transport network (also called backhauling network) which is interfaced with the access network and interconnects access networks, connecting them to the network backbone

-) A backbone network (or "network backbone"): this has the function of transmitting over large distances large quantities of bundled data supplied by the transport networks and is generally realized by means of optical fibre. The backbone is a network with a mesh structure, characterized by traffic flows with a high volume and complex traffic matrix, since it must allow total interconnection between the regional networks.

In a transport network the main functions are the successive accumulation of the data (the data flows are bundled together in increasingly higher transmission hierarchies) and routing of the multiplexed flows on common paths by means of circuit switching and packet switching, for transmission of the data from the access networks to the network backbone. This network therefore consists of a local, urban or regional network.

As regards the transport network, it is also known that the function of accumulation in successive levels requires an essentially hierarchical network structure, where it is possible to distinguish between transport subnetworks on a local, metropolitan and regional level with increasingly larger minimum traffic volumes and capacities. This structure can be translated directly on a topological level as follows: the subnetworks closest to the access network, namely the metropolitan and regional subnetworks, are characterized by a star or loop like structure in which the loop interconnection nodes normally have a higher capacity compared to the other nodes.

Although the transport networks, both owing to their complexity and because of the type of information transported, commonly use all the main transmission technologies (radio link, optical fibre, cabled carriers of the electrical type (copper cable), satellite), most of the links are generally of short-medium range type and use radio links or optical fibre for transmission. In this context "tail links" are defined as being those transport links which are directly connected to the access network, while "feeder links" are defined as being those transport links which combine several "tail links".

As regards the transport networks with radio relay links, it is known that these networks may be subject to performance losses, faults or traffic overloads due to misalignment of the transmission/reception equipment, a sudden increase in traffic on a certain link, atmospheric events, and the like.

It is also known that a transport network may generally comprise a plurality of radio links and that each link is composed of two radio transmission apparatus with associated antenna(s) for transmission/reception of the traffic generated by/directed towards the access network and from/to lower hierarchy links; each radio apparatus is in turn provided with measurements points (at least one for each input/output interface I/O of the apparatus) where, at predefined intervals, performance measurements relating to the operation of the single apparatus are carried out, said measurements being saved in associated counters.

In this context it is known that each transport network is supplied to the clients/users (telephone services providers) by the reception/transmission equipment suppliers who also provide an NMS (Network Monitoring System) for the said equipment. Generally each producer/supplier of equipment for transport networks provides their own NMS specifically designed for their own reception/transmission equipment.

A network monitoring system (NMS) is a complex hardware and software system for managing and controlling the transport network equipment, which has the main tasks of receiving all the alarm signals sent by the equipment (signals indicating hardware faults of the single apparatus, malfunctions, etc.), supplying the latter with the necessary operating parameters and regularly collecting the data of the performance counters which are detected at the measurement points of the single apparatus in the network and storing them by suitably saving them inside an associated database.

Once the data has been stored in the database of the NMS, the latter may provide applications which allow graphic visualization of the progression over time of each single counter for a single measurement point of an apparatus. Owing to the large number of counters to be stored, the corresponding data is usually kept in the database of the NMS for a period less than a predefined maximum limit period, generally of between 30 days and 6-12 months.

As regard the radio links of the transport networks, it is known that these operate using transport protocols which can divided up into essentially two transport technologies:

- Transport technology using Time Division Multiplexing (TDM) protocols, the main protocols being the PDH (access network) protocol and in particular the SDH/SONET protocol;

- Transport technology based on packet protocols, such as Ethernet and IP. These radio link transport technologies are normally independent of the nature of the data transported since the radio transport apparatus are able to transport (by means of emulation) both data of the packet type on TDM technology-based links and TDM data on radio links using packet transport technology. Depending on the transport technology and the protocol used by a link there exist different specifications and/or regulatory standards which define both the counters and the measurements to be performed and the measurement periods for recording the same; for the purposes of the description of the present invention and for a more detailed explanation of the subject reference may be made to the related standards which are cited herein; in this connection see:

- "Transmission and Multiplexing (TM); Digital Radio Relay Systems (DRRS); Synchronous Digital Hierarchy (SDH); System performance monitoring parameters of SDH DRRS; EN 301 129" ;
- MR V M MINKIN CHAIRPERSON: "Recommendations F. 750-4 and F. 1332-1 from ITU-R SG9; TD 6";
- and in particular the standards IETF RFC 2819, ITU-T G. 828, ITU-T G. 784 and M. 2120.

Nowadays, with the gradual introduction of transport apparatus operating using connection-less protocols, the level of complexity of management and monitoring of the connections has increased exponentially.

Owing to the "connection-less" nature of the technology used (e.g. Ethernet) and the possibility of sharing statistically the same resource (transceiver apparatus) among several services, there therefore arises a great need to monitor whether the connections of the transport network and the associated transceiver apparatus are able to ensure effectively the required service/performance level stipulated by the client (service providers) upon signing of the supply contract.

The current NMS monitoring systems are structured to collect the measurements relating to the performance counters of each single measurement point belonging to a single apparatus and have the capacity to store data for a period ranging from one month to 6-12 months (depending on the size of the database).

The current NMS moreover allow the progression of the single counters for the single measurement points to be displayed in the form of graphs and tabular listings, but each progression relates to single counters of single apparatus, without giving a summary and meaningful view of the overall network performance. WO2014/008915 describes a network management system for controlling performance of a communication network, wherein the network management system calculates key performance indicators based on received performance data and compares then with corresponding target values. WO 01/89141 A2 describes a method for identifying and defining performance problems in WAN networks operating using different technologies, wherein:

- performance data is continuously received from each single network element (circuits, structures, nodes, ports and access points) of the network, said data being stored in a database and compared with single threshold values in order to identify specific elements, the performance of which has fallen below a predefined threshold;
- the overall performance of the network is monitored by creating key performance indicators (KPI) which represent the performance of the entire network and identify problems which are inherent in the entire network;
- a network overview report is generated electronically in order to show exceeded thresholds of the single network elements and KPIs for the entire network.

In WO'141 all the performance monitoring counters of each network element are downloaded into a database and compared with a respective threshold value in order to identify, for each counter of the single network element, values which do not conform to the predefined thresholds. The KPIs are instead always calculated for the entire network as a sum, average or weighted average of the statistics of all the network elements, in order to identify general problems of the entire network.

Therefore, WO'191 still requires the downloading of enormous amounts of data relating to the counters of each network element, allows the monitoring exclusively of single parameters of a single network element or overall parameters of the entire network and does not provide any indication as to how to monitor a transport network with physical radio links.

The service provider, however, needs to understand whether the overall network is optimized or not and whether it is able to support the required level of traffic.

In addition, the transport networks are mostly integrated at a local and regional level or composed of apparatus supplied by different producers, while the telephone service providers operate on a national or even international scale. In this context it happens fairly frequently that a provider obtains coverage over the entire territory for which the telephone services are provided by combining/making use of several transport networks often provided by different transport network and equipment producers/suppliers.

This therefore gives rise to a situation where the service provider has available only the single monitoring systems NMS of the single transport networks or categories of apparatus, each NMS having its own database in which the data from a very large number of counters associated with the respective transceiver apparatus is stored, the large amount of data making it impossible to store the counters in the medium-long term and with the stored data being difficult to access; in this situation the provider is unable to monitor the entire network of apparatus available via a single interface nor analyse in the long term the operation thereof.

The situation may also arise where the provider wishes or needs to monitor or analyse the state and/or performance over a given geographical area or of a subassembly of apparatus belonging to different transport networks or in any case associated with different monitoring systems NMS.

In addition, the radio equipment manufacturers generally also do not produce equipment for optical fibre or other kinds of connections and therefore the monitoring systems are not combined or cannot be combined in the case of either different manufacturers of radio equipment or different transport equipment technology (radio, optical fibre, etc.).

The technical problem which is posed, therefore, is that of providing a system for monitoring a transport network, comprising radio links, allowing a telecommunication services provider to monitor whether the network is operating or has operated within a given time interval, in a manner suitable for supporting the volume, the efficiency and the speed of traffic which the provider requires.

In connection with this problem, it is further required that with this method and system it is possible to identify and display easily those links, in particular radio links, which do not comply with the necessary requisites, this facilitating also the identification of the possible causes of the lack of conformity encountered. In connection with this problem it is also desirable that the method and the system should allow simultaneously monitoring, if required, of different transport network apparatus, or parts thereof, managed by respective different monitoring systems NMS which belong to the overall transport network available to the provider.

It would also be desirable if the method and the system could allow a certain predictive capacity as regards the identification of those links which most require maintenance, upgrading or replacement in view of the traffic which must be supported.

These results are obtained according to the present invention by a method for monitoring and analysing telecommunication transport networks according to Claim 1 and a monitoring and analysis system according to Claim 33.

Further details may be obtained from the following description of non-limiting examples of embodiment of the subject of the present invention, provided with reference to the accompanying drawings, in which:

Figure 1 shows a general diagram illustrating the structure of a telecommunications network;
Figure 2 shows a block diagram of the structure of an example of a monitoring and analysis system according to the invention;
Figure 3 shows a graph illustrating the calculation principle according to rule No. 2 of a congestion $KPI_{ETH}$; and
Figures 4a,4e show examples of embodiment of the different levels of a step for displaying the results according to a preferred embodiment of the method according to the present invention.

According to the invention a method is provided for monitoring a transport network assigned to a service provider, in particular for analysing the overall state of the transport network and its suitability for supporting the traffic which the provider requires, as well as for evaluating the performance of the single links and the way the latter affect the overall state of the network.

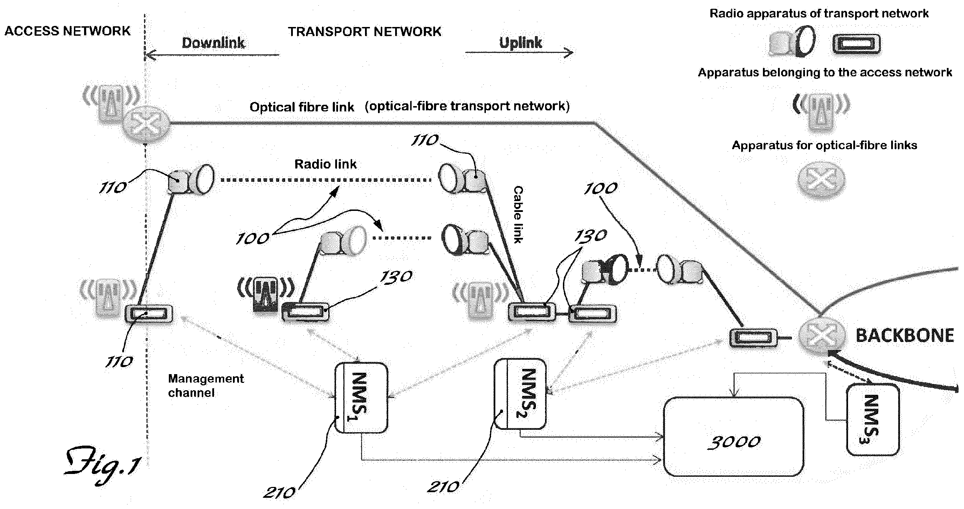

As shown in Fig. 1 and assuming for easier description an uplink direction with orientation of the transmission from transmitter TX to receiver RX directed from the access network to the network backbone and a downlink direction, opposite to the preceding direction, an example of a transport network to be monitored comprises:

- at least one point-to-point, two-way (uplink/down link) radio link (100) composed of two radio transceiver apparatus 110; each apparatus has I/O interfaces provided with measurement points 130 for acquiring measurement data which is saved in respective performance counters of the apparatus and is uniquely identified in the transport network by a respective identifier;
- at least one system ($NMS_1$;$NMS_2$) for monitoring the transceiver apparatus 110 of the transport network, provided with a database 210 for storing the performance counter data acquired from each radio transceiver apparatus 110 with which the monitoring system is associated and relating to data measured at the measurement points 130 of the respective apparatus.

Each apparatus 100 of a radio link 100 of the network is associated with one of the monitoring systems ($NMS_1$;$NMS_2$) and operates using a transport technology based on TDM or packet protocols.

The method according to the invention comprises the steps of:

(INSTALLATION)

- defining at least one key performance indicator KPI for the TDM technology-based links of the transport network, below referred to as $KPI_{TDM}$, each $KPI_{TDM}$ being defined on the basis of a predefined number of performance counters selected from among those measured at the transceiver apparatus operating on TDM protocols of the respective link, saved and stored in the database of the respective monitoring system ($NMS_1,NMS_2$);
- defining at least one key performance indicator KPI for the packet technology-based links of the transport network, below referred to as $KPI_{ETH}$, each $KPI_{ETH}$ being defined on the basis of a predefined number of performance counters selected from among those measured at the transceiver apparatus operating with packet technology of the respective link, saved and stored in the database of the respective monitoring system ($NMS_1,NMS_2$);
- providing an analysis database 3001 suitable for being populated/updated with data downloaded from the databases of the monitoring systems ($NMS_1,NMS_2$) of the transport network and relating to at least those counters on the basis of which the $KPI_{TDM}$ and the $KPI_{ETH}$ are defined;

(USER INTERFACE)

- selecting at least one part of the transport network comprising at least one radio link and of interest for the analysis;
- selecting a time interval for analysis of the selected part of the transport network;
- defining at least one rule for evaluating the conformity of each link of the network part being analysed with the corresponding KPI(s) defined;
- updating, at least up to the selected analysis interval included, the analysis database with the data of the database(s) of the at least one system ($NMS_1,NMS_2$) for monitoring the apparatus of the transport network;

(ANALYSIS)

- For each TDM technology-based link belonging to the selected transport network part: calculating the at least one $KPI_{TDM}$ defined, on the basis of the data contained in the analysis database provided and relating to said selected counters of the two apparatus of the link;
- for each packet technology-based link belonging to the selected transport network part: calculating the at least one $KPI_{ETH}$ defined, on the basis of the data contained in the provided analysis database and relating to said selected counters of the two apparatus of the link;
- For each link of the selected network part: checking the conformity of the at least one KPI calculated for the link, according to said evaluation rule.

In this way it is possible to monitor with a limited number of counters (and therefore without having to download all the data of all the counters of the network apparatus), based on KPIs calculated for each radio link, all the radio links of the transport network part of interest for the analysis, even if managed by different NMS, and provide an analysis of the overall state of the (part of) of the transport network of interest and the single links which form it.

According to a preferred embodiment, the method also envisages a step of outputting a result of the analysis performed, preferably in the form of:

- an overall result for the analysed network part which indicates, for each KPI defined, the percentage of links analysed which do not conform to the KPI defined;

it is also preferably envisaged that said result outputting step is completed also in the form of:

- a detailed result which comprises, for each KPI defined, at least one list or table which can be consulted by the user and in which all those links which do not conform to the said KPI are identified. Preferably, the list or table also comprises an indication of the reason(s) for which the link was considered not to conform with the associated KPI.

With such a results display system the user has a clear indication of the overall state of the network and the possibility of a detailed analysis of those links which the monitoring system detected as not conforming and/or as being in a critical state.

It may however be envisaged that the method or system according to the invention are able to send network management instructions directly to the NMS on the basis of the calculations performed, without the outputting of results or with results being optionally output at the user's discretion. This may be performed based on predetermined rules of "response" in the event of a non-conformity condition.

Preferably, display of the at least two levels (overall level and detailed level) is performed as follows:

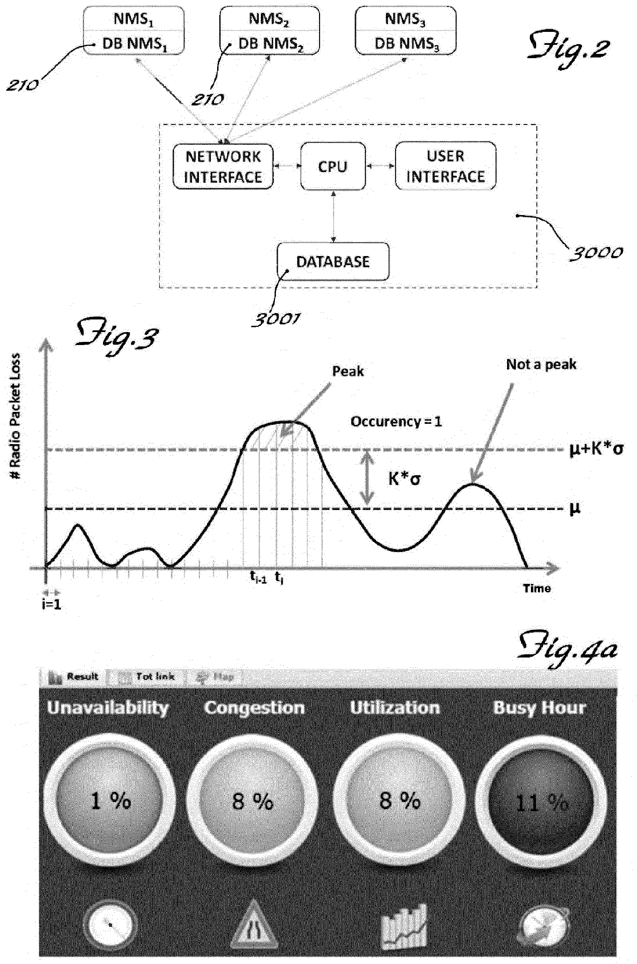

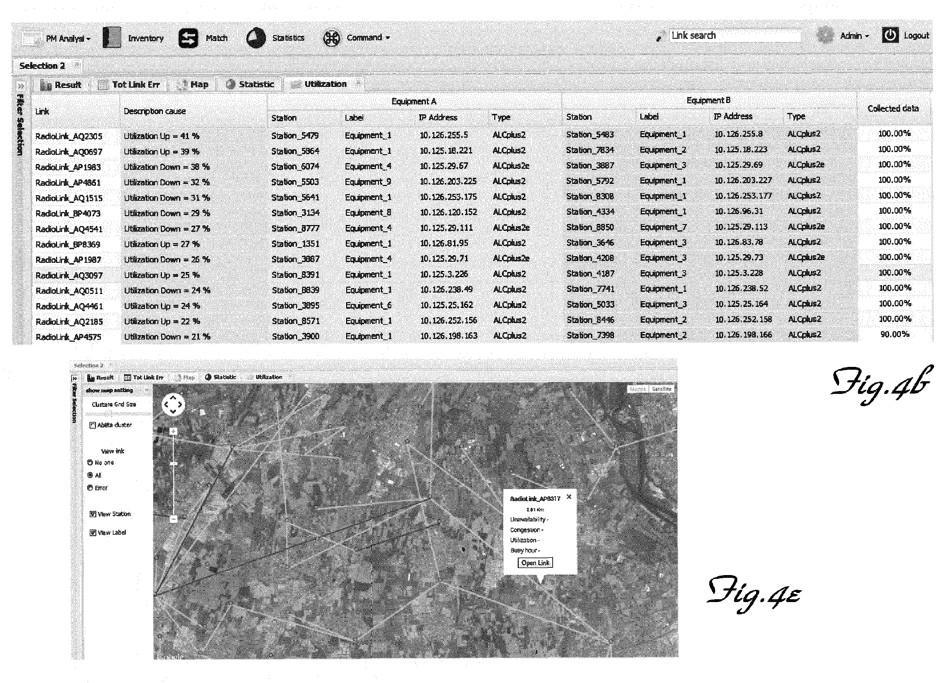

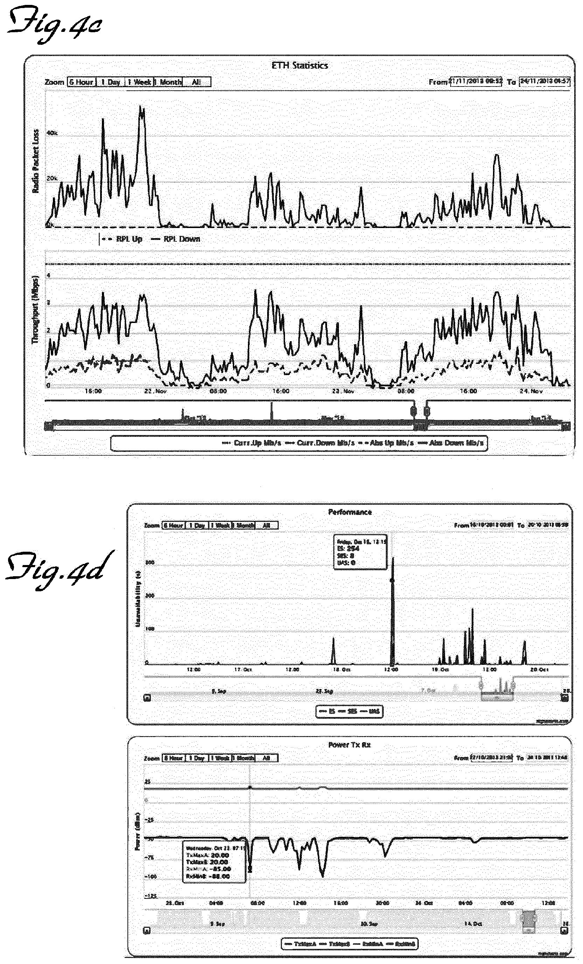

- Overall level (see Figure 4a): for each KPI defined and calculated the percentage of links which do not conform to the respective KPI from among the respective total number of (TDM or packet) links analysed is shown, preferably in the form of a virtual button;
- Detailed level (see Figure 4b): by selecting one of the KPIs shown, for example by clicking on the virtual button of the corresponding overall level, access is obtained to the detailed result, with a list or table showing all the non-conforming links. The list is shown in decreasing order from the most critical link to the least critical link. For each non-comforming link, general identification and configuration information and further measured values which will be defined more fully below are shown.

According to the preferred embodiments which will be illustrated below, said step of defining at least one rule for evaluating the conformity of each link analysed to the corresponding KPI(s) comprises defining at least one threshold value for each KPI defined and said step of checking the conformity of each link to the corresponding KPI(s) comprises comparing at least one value calculated for the KPI with at least one respective defined threshold value.

Preferably, at least one of the said link KPIs is defined by means of cross-analysis, for example a correlation, between a predefined limited number of counters of the radio transceiver apparatus of the link, thus allowing the exclusion of less significant results, as will become clear below.

Preferably the step of defining at least one threshold value for each KPI defined envisages the definition of different threshold values for different link categories, preferably different threshold values for Tail type links and Feeder type links; according to a further preferred implementation a threshold for each link may be defined. This may be performed also only for one or some of the KPIs defined, maintaining for all the other KPIs a common threshold for all the links.

Preferably, according to preferred embodiments, for definition and calculation of one or more of the KPIs, the analysis time interval is divided up into calculation subintervals, preferably with a duration corresponding to the temporal subdivision (measurement period) prescribed for acquiring the counter measurements, preferably equal to 15 minutes.

A first preferred embodiment envisages that the at least one indicator $KPI_{ETH}$ comprises a Congestion KPI, below also referred to as KPI CONG, suitable for analysing the congestion level of each link operating with packet-based technology and providing an indication of the overall congestion of the selected transport network part. According to this embodiment, the KPI CONG is defined, for each packet technology-based link of the selected transport network part, on the basis of the number of drop events of one or more consecutive packets on the link (in both directions of transmission) and of the variable transport capacity used by the link in a calculation time subinterval comprising the packet drop event. If the link consists of a radio link the transport capacity is directly linked to the modulation.

Preferably any alarms sent from the apparatus which form the link and received by the monitoring system in said analysis time interval are also taken into consideration.

The overall result outputting step identifies the congestion of the network part selected for the analysis as a percentage of the links operating using packet-based technology and belonging to the selected network part which, in the analysis time interval, did not conform to the respective evaluation rule (threshold value) defined for the congestion KPI

Example of definition of the Congestion KPI:

Input parameters and selected counters

- RADIO PACKET LOSS: RPL = Number of packet drop events on the link in the analysis time interval;
- RPL(i) = Total number of events $N_{tot}$ in which one or more consecutive packets received at the input of the interfaces of each apparatus of the link and intended for transmission on the link have not been transmitted on the link by the said apparatus, in the i-th calculation subinterval,

  - is calculated in each i-th calculation subinterval and for both the directions of the link (uplink and downlink);

- Maximum modulation (e.g. ACM at 256QAM) in the calculation subinterval;
- Management system alarms (optional)

Usually each transceiver apparatus operating using a packet protocol is provided, at each measurement point, with a counter for calculating the packet drop events, i.e. those events where one or more consecutive packets, intended for transmission on the link, have not however been transmitted.

According to preferred embodiments of the invention, where feasible, it will therefore be possible to calculate the "Radio Packet Loss" RPL value as the sum of the single packet drop event values at each measurement point of the TX apparatus of the link.

The length "length[i]" of the calculation subinterval is chosen as being equal to the measurement period of the counter(s), preferably equal to 15 minutes.

For links (radio and non-radio links) operating on Ethernet protocol, for example, the EtherStatsDropEvents counter defines, for each measurement point, the number of packet drop events in the measurement period; calculation of the RPL may then be performed, for each i-th calculation subinterval which forms the analysis interval, as follows:

$$RPL(i) = RPL_{uplink}(i) + RPL_{downlink}(i),$$

where

$$RPL_{uplink}(i) = \Sigma_j \text{ EtherStatsDropEvents}(i)$$

where j = all the measurement points of the uplink TX apparatus of the link, and

$$RPL_{downlink}(i) = \Sigma j \text{ EtherStatsDropEvents}(i)$$

where j = all the measurement points of the downlink TX apparatus of the link.

Moreover, the ACM counter is also defined for all the apparatus of a radio link, said counter indicating, for each measurement period and therefore calculation subinterval, the time in seconds for which the radio transmission apparatus (TX in uplink or TX in downlink) operated at maximum modulation. Therefore, if for the i-th calculation subinterval, the value of ACM(i) is equal to the number of seconds which form the said subinterval, the apparatus will have worked at maximum modulation for the entire i-th subinterval, namely at its maximum transport capacity.

In greater detail, according to this preferred embodiment, the congestion KPI is defined and calculated on the basis of the aforementioned input counters and applying the following rule:

Rule No. 1 for definition of KPI CONG

For each i-th calculation subinterval (with a duration equal to the measurement period = e.g. 15 minutes) and for each direction of the link (uplink;downlink) RPL(i) is calculated, namely the total number of packet drop events on the link, but this RPL(i) is considered in the calculation of the overall RPL(i) only of in the corresponding i-th calculation subinterval the link operated at maximum modulation (i.e.: ACM(i)=length[i]= e.g. 900s).

A cross-analysis of the number of packet drop events and the transport capacity of the link is therefore performed in such a way as to ignore any non-transmissions which are not dependent on undersizing of the link relative to the traffic or in any case on insufficient resources and are instead due to other factors.

The congestion KPI is therefore defined and calculated as the sum of the values of all the packet drop events RPL(i) considered valid in the selected analysis interval:

$$KPI \text{ CONG (RULE NO. 1)} = RPL = \Sigma_i RPL(i): [ACM(i) = length[i]] =$$

$$= (\Sigma_i RPL_{uplink}(i): [ACM_{uplink}(i) = length[i] ]+$$

$$\Sigma_i RPL_{downlink}(i): [ACM_{downlink}(i) = length[i] ])$$

(wherein ":" stands for "such that").

According to the variation of embodiment which takes account also of the alarms received, RPL(i) is set to 0 also if, in the i-th calculation subinterval, alarms from the radio link apparatus examined and indicating for example a fault in the link or a reduction in the transport capacity thereof are detected.

For the congestion KPI a threshold which corresponds to the maximum RPL value in the entire analysis interval selected, or to the maximum total number of packet drop events on the link acceptable for the provider in the selected analysis interval, may be defined. This threshold may be defined directly by the user or obtained automatically for the selected analysis interval on the basis of a desired criterion which can be more easily defined by the user. For example, the user may define the maximum number of drop events in a week or in a day and this event is automatically correlated to the selected analysis interval, defining the threshold of the KPI.

<u>EXAMPLE</u>

For a generic link "link1" operating using packet technology and for a measurement period of the respective counters defined as being equal to 15 minutes and therefore a corresponding subdivision of the analysis time interval into i-th calculation subintervals of 15 minutes, the following is obtained:

$$\text{KPI CONG(link1)} = \Sigma_i \, [\text{RPL}_{\text{link1}}(i): \text{ACM}(i)=900s]$$

in the case of a simple cross-analysis between dropped packets and modulation in the i-th subinterval comprising the drop moment.

In the case where alarms received in relation to link1 in said i-th calculation subinterval are also taken into account, the following is obtained:

$$\text{KPI CONG(link1)} = \text{RPL} =$$

$$\Sigma_i \, [\text{RPL}_{\text{link1}}(i): (\text{ACM}_{\text{link1}}(i)=900s \text{ AND Alarms}_{\text{link1}}(i)=0)]$$

The formulae shown above are to be understood as being calculated both for uplink and for downlink, as shown previously.

If the overall RPL of link1 is higher than the threshold defined for link1, the latter will be regarded as not conforming to the Congestion KPI.

According to a further preferred embodiment the definition of the congestion KPI envisages the definition of a further analysis level, in accordance with the following further steps and with reference to Figure 3:

<u>Rule No. 2 Congestion KPI</u>

With reference to that described for Rule No. 1, the following further parameters are defined for each link and for each direction (uplink and downlink) on the basis of the packet drop events data on the link in the selected analysis time interval (RPL) calculated according to Rule No. 1:

AVG RPL =    AVG RPL = average number of packet drop events on the link in the selected analysis time interval, considered in the calculation only if in the corresponding calculation subinterval the link operated at maximum modulation:

$$\text{AVG RPL} = \mu = E[\Sigma i \, [\text{RPL}\,(i): \text{ACM}(i)= \text{length}[i]]$$

σ =    σ = Standard deviation of the progression of the packet drop events in the selected time interval, considered in the calculation only if in the corresponding calculation subinterval the link operated at maximum modulation:

$$\sigma = \text{STD DEV}[\Sigma_i \, [\text{RPL}_{\text{link1}}(i): \text{ACM}(i)= \text{length}[i]]$$

PEAK THRESHOLD    $\mu+K^*\sigma$, where K= 1,2,3,.. is a tolerance factor which can be set by the user, preferably equal to 1, 2 or 3;

PEAK EVENT =    each i-the subinterval included in the selected analysis interval, in which the number of packet drop events RPL(i) is greater than the PEAK THRESHOLD:

$$i = \text{Peak IF } [\text{RPL}(i) > \mu+K^*\sigma];$$

OCCURRENCY =    each i-th subinterval included in the selected analysis interval, within which the number of packet drop events RPL(i) is greater than the PEAK THRESHOLD = $\mu+K^*\sigma$, unless this is true also for the (i-1)-th subinterval; in this case for the calculation subintervals [i-1, i] a single Occurrency is calculated:

i = Occurrence IF:

$$RPL(i) > PEAK\ THRESHOLD\ AND\ RPL(i\text{-}1) \leq PEAK\ THRESHOLD$$

Correspondingly, the step for calculation of the congestion KPI for each link will envisage that, following calculation of the KPI according to rule No. 1, the following further parameters are calculated for each link and for each direction (uplink and downlink) on the basis of the packet drop events data ($RPL_{link}$) in the selected analysis time interval;

- Calculation of AVG RPL = average number of packet drop events on the link in the selected analysis time interval;

$$\mu = E[\Sigma_i\ [RPL(i): ACM(i)= length[i]]$$

- Calculation of $\sigma$, standard deviation of the progression of the packet drop events in the selected time interval;
- Calculation of the PEAK THRESHOLD = $\mu+K^*\sigma$, with K= 1,2,3, set by the user;
- The PEAK EVENTS are calculated;
- The OCCURRENCY events within the analysis interval selected by the user are calculated.

Correspondingly the result outputting step will comprise also providing the total number of OCCURRENCY events detected in the selected analysis interval.

This allows the user to determine easily and quickly whether the link considered not in conformity according to the KPI CONG has experienced a continuous packet drop in the time interval or whether there have been one or more dropped packet peaks in specific periods of the analysis interval, allowing the user to establish whether the non-conformity of the link is due to a constant undersizing thereof or to a particular traffic condition in certain periods. For the same value of $\mu$, the smaller the number of Occurrency events the less serious will be the problem (fewer peak conditions).

Also in this case it is possible to take into account alarms received in relation to the link in each calculation subinterval.

For the congestion KPI, the step of outputting a result of the analysis carried out is preferably performed as follows:

- Detailed result for each link of the analysed network part not in conformity with the Congestion KPI:
  Generation of a list, in a decreasing order from the most critical link to the least critical link (determined on the basis of the calculated RPL value), with a specific column for the numerical value of RPL events (based on Rule No. 1 above) affecting the single link within the selected time interval; according to the example of embodiment described, the list also includes a further column with the number of Occurrency events as calculated by means of Rule No. 2. Preferably, the list is in the form of a table and, as shown in Fig. 4B, has a column for the RPL value and a column for the number of Occurrency events;
- Overall result for the network part analysed: the congestion of the network part selected is displayed as a percentage of links which have exceeded the threshold defined in relation to the overall number of packet technology-based links belonging to the network part selected for the analysis.

According to a preferred embodiment, the at least one $KPI_{TDM}$ comprises a non-availability KPI (below referred to as Unavailability KPI or KPI UNAV) which analyses in the selected analysis interval whether each TDM technology-based link of the selected network part was in conformity with the expected availability requirements.

This unavailability KPI is defined and calculated on the basis of one or more of the ES, UAS and SES counters defined for the TDM technology:

ES (Errored Seconds): number of seconds during the measurement period in which at least one errored block was detected at the measurement point of the radio reception interface of the apparatus (CRC);
SES (Severely Errored Seconds): number of seconds during the measurement period with at least a given percentage of errored blocks detected at the measurement point on the radio reception interface of the apparatus;
UAS (Unavailable Seconds): unavailability seconds of the signal.

According to a preferred embodiment, the Unavailability KPI is defined as a set of one or more, preferably all, of the following three parameters, which are functions of the ES, SES and UAS counters:

$$Quality_{ES} = \left[\frac{(60*60*24*30 - ES_M)}{60*60*24*30}\right]*100$$

$$Quality_{SES} = \left[\frac{(60*60*24*30 - SES_M)}{60*60*24*30}\right]*100$$

$$Quality_{UAS} = \left[\frac{(60*60*24*365 - UAS_M)}{60*60*24*365}\right]*100$$

wherein:

- $ES_M$ = maximum overall monthly value of ES in the selected analysis interval, the overall monthly value of ES being defined as the sum of all the values of the ES counter detected in the month;
- $SES_M$ = maximum overall monthly value of SES in the selected analysis interval, the overall monthly value of SES being defined as the sum of all the values of the SES counter detected in the month;
- $UAS_M$ = maximum overall monthly value of UAS in the selected analysis interval, the overall annual value of UAS being defined as the sum of all the values of the UAS counter detected in the year.

Preferably the "month" and "year" are defined on the basis of the calendar months and years, irrespective of the start and end dates of the selected analysis interval.

The step of defining at least one threshold for the Unavailability KPI envisages the definition of an Availability Threshold = percentage points of availability of the link for the selected analysis interval.

Preferably the method envisages the automatic conversion of said Availability Threshold into the following three corresponding thresholds for the parameters defined above:

- $Threshold_{ES}$ = availability percentage with respect to one month, for the ES values
  = 60*60*24*30*(100 - Availability threshold)/100
- $Threshold_{SES}$ = % of $Quality_{SES}$ (availability percentage threshold with respect to one month, for the SES values)
  = 60*60*24*30*(100 - Availability threshold)/100
- $Threshold_{UAS}$ = availability threshold with respect to one year, for the UAS values
  = 60*60*24*30*365*(100 - Availability threshold) /100

Preferably the Availability Threshold is between 98.0 and 99.99, and preferably equal to 99.95.

The step of calculating the Unavailability KPI for each TDM technology-based link envisages calculating $Quality_{ES}$, $Quality_{SES}$ and $Quality_{UAS}$ on the basis of the respective ES, SES and UAS counters for the selected analysis interval.

The calculation is performed both in the uplink direction and in the downlink direction; for each direction the ES, UAS and SES counters considered for definition and calculation of the KPI are those detected at the measurement point on the radio reception interface of the RX apparatus of the link in the direction considered.

The step of checking the conformity of each link for the Unavailability KPI envisages comparing, for each TDM technology-based link of the selected network part, the calculated values of $Quality_{ES}$, $Quality_{SES}$ and $Quality_{UAS}$ with the respective thresholds defined, for each direction (uplink;downlink) of the link; if one of the six values is greater than the respective threshold, the link is regarded as not conforming with the Unavailability KPI:

$$IF\ Quality_{ES} > Threshold_{ES}$$

$$and/or$$

$$IF\ Quality_{ES} > Threshold_{ES}$$

$$and/or$$

$$IF\ Quality_{ES} > Threshold_{ES}$$

then linki does conform to the Unavailability KPI.

A cross-analysis is therefore carried out on the three cited TDM counters of the two apparatus forming the link for which the KPI is being calculated, suitably processed.

EXAMPLE

In greater detail, for a generic TDM technology-based link, link2, a selected analysis interval from 15 February to 5 May of the same year and for an Unavailability KPI defined as a set comprising $Quality_{ES}$, $Quality_{SES}$ e $Quality_{UAS}$, calculation of the KPI and verification of the conformity will be performed as follows: Uplink:

- All the values of the ES counter detected at the radio reception interface of the uplink RX apparatus during the month of February (period from 5/2 to 28/2) are added together;
- All the values of said ES counter during the month of March (1 - 31/3), April (1 - 30/4) and May (1 - 5/5) are added together;
- The maximum overall monthly values $ES_{M-uplink}$ from among the four values calculated is determined;
- The following is calculated

$$\text{Quality}_{ES}\ \text{Link2}_{\text{uplink}} = \left[ \frac{(60*60*24*30 - ES_{M-uplink})}{60*60*24*30} \right] * 100$$

- $Quality_{ES}$ $Link2_{uplink}$ is compared with the respective $Threshold_{ES}$ defined;
- If $Quality_{ES}$ $Link2_{uplink}$ > $Threshold_{ES}$

then $link2_{uplink}$ is not in conformity;

- The calculation is repeated and the conformity is checked for $Quality_{SES}$ and $Quality_{UAS}$;
- The procedure is repeated for the downlink direction.

According to a further preferred implementation the alarms received from the network in relation to the link are also taken into consideration, namely the fact that one of the three thresholds is exceeded will not be considered if the NMS of the link has received alarms regarding the apparatus of this link in the analysis time interval.
Results output for the Unavailability KPI:

• Displaying of the overall result in the form of percentage of non-conforming links in relation to the total number of TDM technology-based links analysed, namely the number of links which have exceeded at least one of the three thresholds (ES, SES and UAS) previously defined in relation to the total number of TDM technology-based links of the network part selected for the analysis.
• Detailed results: displaying of the parameter(s) which do not conform The KPI UNAV therefore determines the links - from among those operating using TDM protocol technology (e.g. PDH or SDH) and belonging to the network part selected for the analysis - which, in the analysis time interval, exceeded the unavailability thresholds defined. With the aid of these three defined parameters, which are functions of counters selected from among those measured at the apparatus of the TDM technology-based links, and comparing them with the defined thresholds, it is possible to indicate in a comprehensive manner - using only the data relating to a predefined limited number of counters - whether each link is in conformity with the requirements and the service availability requirements requested by the provider.

According to a further preferred embodiment a so-called Utilization $KPI_{Eth}$, or KPI UTIL, is defined for the links operating using packet protocols, in particular the Ethernet protocol. This KPI analyses the Ethernet technology-based links of the selected network part in order to determine which links have exceeded a threshold defined by the user for average use of the link.

Definition of the Utilization KPI

The Utilization KPI is defined as the average use (in a measurement period) of the radio interface of the TX transmission apparatus of the link during the entire analysis interval and in both directions (uplink, downlink) of the link.
For Ethernet links the Utilization KPI is advantageously defined as being the ratio between the sum of the value of the etherHistoryUtilization counter in each measurement period included in the selected analysis interval and the number of measurement periods included in the analysis interval.

For the definition and calculation steps the etherHistoryUtilization counter detected at the radio interface of the TX transmission apparatus of the link, in the respective uplink or downlink transmission direction, is used.

The KPI Utilization calculation step envisages determining this average both in uplink and in downlink for each Ethernet link of the selected network part.

The threshold for the Utilization KPI may be defined in the form of percentage points of average use during the single period of measurement in the analysis time interval.

The conformity verification step envisages comparing the value of average use calculated with the defined threshold and, if it is greater than the threshold, the link will be regarded as not conforming to the Utilization KPI; the comparison is carried out both for average uplink use and for average downlink use.

Results output:

- Overall result as a percentage of links which have exceeded the threshold defined for the Utilization KPI in relation to the total number of packet technology-based links of the network part selected for the analysis;
- Detailed result: Generation of a list or table in decreasing order from the most critical link (greatest deviation from the threshold defined) to the least critical link, with a column indicating the calculated value of the Utilization KPI for each non-conforming link in the selected analysis interval.

According to a further preferred embodiment a further Busy Hour Utilization $KPI_{Eth}$ is defined, this determining which Ethernet links have exceeded a given threshold of use during the fraction of the analysis interval in which the link was subject to greatest use (Busy Hour).

Rules for defining and calculating Busy Hour Utilization

The Busy Hour Utilization KPI is defined as being the average hourly use of the link during the 8 monthly hours of greatest use (Busy Hour). This average of hourly use during the 8 monthly hours with highest use value is preferably defined and calculated on the basis of the Ethernet etherHistoryUtilization counter detected at the radio interface of the TX apparatus of the link and in both directions of the link.

For each direction of the link, the etherHistoryUtilization counter values relating to the analysis interval and acquired with a measurement period of 15 minutes (or otherwise defined) are first averaged over one hour. The values relating to the 8 hours with greater hourly average are then selected for the calculation of the Busy Hour Utilization KPI which is defined as an hourly average over said 8 monthly hours of maximum use.

If the analysis interval selected is different from 30 days the method envisages defining the Busy Hour by automatically correlating the 8 hours of highest use over 30 days to the selected analysis interval:

8h:720h = Busy Hour [h] : Analysis interval [h]

For example, for an analysis interval of one week, the method envisages averaging the use over the 2 hours where the sum of the values of the etherHistoryUtilization counter is highest.

The user defines a threshold equal to the maximum acceptable value in percentage points of average hourly use during the Busy Hour defined.

Results output:

- Overall result: displaying as a percentage of links which have exceeded the defined threshold in relation to the total number of Ethernet protocol links of the selected network part.
- Detailed results: Generation of a list in decreasing order from most critical link (>Busy Hour Utilization) to least critical link, with a specific column which shows, for each non-conforming link, the Busy Hour Utilization value measured during the selected analysis time interval.

It is therefore clear how with the method according to the invention it is possible to monitor and analyse the performances of the single links of a transport network assigned to a provider using an extremely small predefined number of performance counters selected from among those measured at the measurement points of the transceiver apparatus of the network links and considering both directions of a link. By means of the definition of at least one KPI both for the TDM technology-based links and for the packet technology-based links it is possible to monitor and analyse all the radio links of the transport network.

By processing the KPIs of a link using a cross-analysis, in particular by suitably correlating the selected counters with each other, it is possible to diagnose only the drop in performance which depends on specific or structural undersizing of the network links. This can be rendered even more effective by performing further statistical processing, for example by applying Rule No. 2 of the Congestion KPI described above, or considering also the network alarms for the apparatus of a link being analysed.

A preferred, embodiment illustrated for example in Fig. 4a,b envisages calculating in combination the four KPIs defined above; the combination of the four KPIs has proved to be surprisingly effective for providing the end user with an intuitive indication of the overall state of the network and the single links which require attention.

Advantageously, the various levels for displaying of the results allow both an overall and very detailed analysis of the links which are critical for the transport network.

With the method described it is also possible to distinguish seasonly-wise between exceptional trends (requiring no further action on the part of the provider) and real trends due to structural undersizing and resulting in continuous errors over time or prolonged and/or numerous peaks.

Preferred embodiments of the step for displaying the results relating to one or more of the KPIs defined and calculated envisage the following further detailed results:

- FIGS. 4b-4d: selecting a single link present in the list or table described for the preceding embodiments, given access to a further detailed level which displays again the identification and configuration data of the link together with one or more graphs illustrating the trend over time of the counters; depending on the type of KPI these graphs may show one or more of the following:

• KPI$_{eth}$:

- RPL in the uplink and downlink direction

Utilization in the uplink and downlink direction

KPI Unavailability:

- ES in the uplink and downlink direction
- SES in the uplink and downlink direction
- UAS in the uplink and downlink direction

• Power trend in the uplink and downlink direction

- Power received: RTLM counters
- Power transmitted: TLTM counters

Moreover, it is possible to access a Map level: by making a suitable selection a map centred directly on the analysed link is opened: this function allows one to understand further whether the link is of the tail or feeder type and, in the latter case, how many links it combines owing to immediate graphic visualization of the links.

- Map Level (Figure 4e): From the overall display level (Fig. 4a) it is also possible to access a geographical representation of the network topology with geographical references, using Google maps for example. The conformity/non-conformity of each link is represented by means of a colour code (for example green for links conforming with and red for links not conforming with at least one of the KPIs defined). Selecting a link from the map allows access to a summary of the link characteristics and the results of the analysis carried out on the link (KPIs calculated and conformity therewith).

Preferably, the map representation also allows the possibility of choosing via a filter option which links or categories of links are to be displayed (for example: show only the links which do not conform with a certain KPI or show all the tail or feeder links). By performing a double click on the link it is possible to access directly other display levels (Figures 4b-4d).

Owing to the possibility of managing the KPIs depending on the type of link, with definition of respective different specific thresholds, the method and system according to the invention are able to apply different conditions for defining the conformity and critical nature of a certain category of links. This is advantageous because a tail link is a link connected directly to the access network and transports the traffic of at the most a few radio stations of the access network (2G, 3G or LTE), present in a same physical location, while a feeder link transports instead the combined traffic of several tail links. Owing to the nature of the two types of links the expected performance results will be different:

- Tail link: more irregular progression of the capacity, high probability of dropped packets over time and a link which on average is underused;
- Feeder link: more continuous progression of the capacity, fewer dropped packets over time and medium-to-high utilization.

It is therefore clear how with the method according to the invention, knowing the different nature of the links, it is possible to define different thresholds in relation to the type of link and present the results in more significant manner for analysis and improved performance.

Predictive modules

With the method according to the invention it is also possible to develop predictive modules which allow a prediction of the future trend of the network performance on the basis of the historical analyses performed using the method. In detail it is possible to record at regular intervals the result of the KPIs (percentage of the links which exceed the thresholds and single links which are critical) and, once a significant amount of data has been collected, carry out projections continuing the tendential progression of the key performance indicators by means of data interpolation techniques. This may be achieved, for example, using linear regression techniques; in this connection it is envisaged that it is possible to choose both the type and frequency of interpolation and the projection horizon.

This allows one to obtain an indication of both the overall network tendency as well as those links which are progressing increasingly more rapidly towards congestion, saturation or a reduction in radio performance.

A further predictive module may envisage increasing by a certain average amount (chosen by the user) the network load, in order to define those links which most likely will encounter congestion events or unavailability in the near future, allowing a better choice as regards allocation of the resources for modernising/upgrading the links.

With the method according to the invention it is possible, by means of analysis of the KPIs defined on the basis of the received power counters - excluding exceptional cases of temporary low signal reception conditions - to produce a list of links which, over time (various months or years), are subject to a continuous deterioration, with identification of external deterioration factors (probably due to a misalignment of antennas, trees which are growing between the two apparatus of the link, etc.).

With reference now to Figure 2, an example of a structure of a monitoring and analysis system which applies the method according to the invention is described.

An example of a system 3000 comprises at least:

- a processing unit associated with at least one memory for saving the rules for defining and calculating the KPIs;

the processing unit being connected to:

- an analysis database suitable for being populated/updated with data downloaded from the databases of the monitoring systems $NMS_1$,$NMS_2$ of the transport network and relating to at least the counters on the basis of which the $KPI_{TDM}$ and the $KPI_{ETH}$ are defined;
- at least one module for interfacing with the transport network (NETWORK INTERFACE) suitable for connection with the NMS of the transport network for downloading the data for populating/updating the database designed to monitor and receive the alarms relating to the transport network;
- at least one user interface designed to:

  - allow the choice by a user of the analysis time interval, the network part to be analysed and the thresholds of the KPIs or associated conformity evaluation rules;
  - preferably, display the results of the analysis performed.

The processing unit being designed to calculate the KPIs for the links of the selected network part on the basis of the data contained in the database for monitoring and evaluating the conformity thereof, preferably by means of comparison of the KPIs calculated with thresholds defined by means of the user interface.

It is also envisaged, as schematically shown in Figs. 1-2, that the system and the method according to the invention may include in the monitoring and analysis also non-radio links operating on the Ethernet protocol, for example optical fibre links. However, for these links the rule relating to modulation in the calculation subinterval will not be applied, but simply the packets dropped on the link will be considered. This also owing to the fact that only a fixed - and not a variable - link capacity is envisaged for optical-fibre links.

Although described in connection with a number of embodiments and a number of preferred examples of implementation of the invention, it is understood that the scope of protection of the present patent is determined solely by the claims below.

**Claims**

1. Method for monitoring and analysing a transport network for telecommunications, the transport network comprising:

- at least one two-way point-to-point radio link composed of two radio transceiver apparatus, each apparatus:

-- being uniquely identified in the network by a respective identifier;
-- operating using Time-division multiplexing, TDM, or packet transport technology and
-- having respective I/O interfaces where measurement points are present for acquiring performance data, and
-- having performance counters for saving the data acquired;

- at least one system ($NMS_1$;$NMS_2$) for monitoring the transceiver apparatus of the transport network;

wherein
the transceiver apparatus of each radio link of the network are associated with one of said at least one a monitoring system ($NMS_1$;$NMS_2$) for the transceiver apparatus of the transport network, and wherein each monitoring system is provided with a database for saving the data of performance counters acquired by the apparatus with which the monitoring system is associated;
the method comprising the steps of:

- defining at least one key performance indicator, $KPI_{TDM}$, for the TDM technology-based links, each $KPI_{TDM}$ being defined on the basis of a predefined number of performance counters selected from among those of the transceiver apparatus of the respective link saved and stored in the database of the respective monitoring system ($NMS_1$,$NMS_2$);
- defining at least one key performance indicator, $KPI_{ETH}$, for the packet technology-based links, each $KPI_{ETH}$ being defined on the basis of a predefined number of performance counters selected from among those of the transceiver apparatus of the respective link, saved and stored in the database of the respective monitoring system ($NMS_1$,$NMS_2$);
- providing an analysis database (3001) suitable for being populated/updated with data downloaded from the databases of the monitoring system ($NMS_1$,$NMS_2$) of the transport network and relative at least to those counters on the basis of which the $KPI_{TDM}$ and the $KPI_{ETH}$ are defined;
- selecting at least a part of the transport network of interest for the analysis and comprising at least one radio link;
- selecting a time interval for analysis of the selected part of the transport network;
- defining at least one rule for evaluating the conformity of each link of the network part to be analysed with the corresponding at least one key performance indicator KPI defined;
- updating, at least up to the selected analysis time interval included, the analysis database with the data from the databases of the at least one system ($NMS_1$,$NMS_2$) for monitoring the apparatus of the transport network;
- for each TDM technology-based link belonging to the selected transport network part: calculating the at least one $KPI_{TDM}$ defined, on the basis of the data contained in the analysis database and relative to said selected counters of the apparatus of the link;
- for each packet technology-based link belonging to the selected transport network part: calculating the at least one $KPI_{ETH}$ defined, on the basis of the data contained in the analysis database and relative to said selected counters of the apparatus of the link;
- for each link of the selected network part: checking the conformity of the at least one KPI calculated for the link, according to said evaluation rule.

**2.** Method according to the preceding claims, wherein said step of defining at least one rule for evaluating the conformity of each link being analysed to the corresponding KPI comprises defining at least one threshold value for each KPI defined; and wherein said step of checking the conformity of each link with the corresponding at least one KPI calculated comprises a comparison of at least one value calculated for the link with at least one respective threshold value defined.

**3.** Method according to claim 2, **characterized in that** the step of defining at least one threshold value for each KPI defined envisages the definition of different threshold values for different link categories, preferably different threshold values for Tail type links, and for Feeder type links and/or a threshold value for each link of the selected network part.

**4.** Method according to any one of the preceding claims, wherein at least one of the said key performance indicators is defined and/or calculated by means of a cross-analysis of two or more performance counters selected from among those acquired by the radio transceiver apparatus forming the respective link.

**5.** Method according to any one of the preceding claims, wherein, for definition and/or calculation of one or more of the key performance indicators, the analysis time interval is divided up into calculation subintervals, preferably with a length, length [i], corresponding to the prescribed measurement period for updating the measurements of the performance counters, more preferably equal to 15 minutes.

**6.** Method according to any one of the preceding claims, **characterized in that** said performance counters selected for defining the at least one $KPI_{ETH}$ comprise EtherStatsdropEvents and Adaptive Coding and Modulation, ACM, counters.

**7.** Method according to any one of the preceding claims, wherein the at least one $KPI_{ETH}$ indicator comprises a Congestion KPI defined on the basis of the number of packet drop events on the link in both transmission directions (uplink;downlink) and of the variable transport capacity used on the link in a calculation time subinterval comprising the moment of the packet drop event.

**8.** Method according to the preceding claim, wherein, for the definition and calculation of the Congestion KPI, alarms sent from the apparatus of the link and received by the monitoring system ($NMS_1$; $NMS_2$) in said selected analysis time interval are also taken into consideration.

**9.** Method according to Claim 7 or 8, **characterized in that** said Congestion KPI is defined as Radio Packet Loss, RPL, wherein

$$RPL = \Sigma_i RPL(i)$$

where i = each calculation subinterval included in the analysis interval,
RPL(i) = Total number of events in which one or more consecutive packets received at the input interfaces of a transmission apparatus of the link and intended for transmission on the link have not been transmitted by the said apparatus, calculated in the i-th calculation subinterval which forms the analysis interval and for both directions of the link (uplink;downlink), and **in that**:

RPL(i) is considered to be greater than zero only if, for the entire calculation subinterval considered and in the respective transmission direction (uplink;downlink), the radio transmission apparatus of the link operated at its maximum modulation.

**10.** Method according to the preceding claim, **characterized in that**

- said evaluation of the modulation at which the transmission apparatus TX of the link operated in the i-th calculation subinterval and in the respective transmission direction (uplink;downlink) is performed by means of the respective ACM counter $ACM_{uplink}(i)$, $ACM_{downlink}(i)$;
- the length of the calculation subinterval is chosen as being equal to the measurement period of said ACM counter, preferably equal to 15 minutes;
- and **in that** RPL is defined and calculated as follows: $RPL = \Sigma_i RPL(i)$:

$$[ACM(i) = length[i]] =$$

$$(\Sigma_i RPL_{uplink}(i): [ACM_{uplink}(i)=length[i]] +$$

$$\Sigma_i RPL_{downlink}(i): [ACM_{downlink}(i)=length[i]] \,) \,.$$

11. Method according to the preceding claim, **characterized in that** for radio links operating on Ethernet protocol, said selected counters are the EtherStatsDropEvents counter and the ACM counter and **in that**, for each i-th calculation subinterval which forms the analysis interval, $RPL_{uplink}(i)$ and $RPL_{downlink}(i)$ are defined and calculated as follows:

$$RPL_{uplink}(i) = \Sigma_j \, EtherStatsDropEvents(i)$$

where j = all the measurement points of the TX apparatus of the uplink connection and

$$RPL_{downlink}(i) = \Sigma_j \, EtherStatsDropEvents(i)$$

where j = all the measurement points of the TX apparatus of the downlink connection.

12. Method according to any one of Claims 9-11, **characterized in that**, for each packet technology-based link of the network part selected for analysis, during calculation of the Congestion KPI, RPL(i)=0 is set if, in the i-th calculation subinterval, at least one alarm from at least one apparatus of the link has been detected.

13. Method according to any Claim 9-12, wherein the definition and the calculation of the Congestion KPI comprise the definition and calculation of the following further parameters for each packet technology-based link and for each direction (uplink;downlink) on the basis of the packet drop events RPL data on the link in the selected analysis time interval:

• AVG RPL = average number of packet drop events on the link in the selected analysis time interval, these events being considered in the calculation only if in the corresponding calculation subinterval the link operated at maximum modulation:

$$AVG\;RPL = \mu = E[\Sigma_i\,[RPL\,(i): ACM(i)= length[i]]$$

• $\sigma$ = Standard deviation of the progression of the packet drop events in the selected time interval, each considered in the calculation only if in the corresponding calculation subinterval the link operated at the maximum modulation:

$$\sigma = STD\;DEV[\Sigma_i\,[RPL\,(i): ACM(i)= length[i]]$$

• PEAK THRESHOLD = $\mu+K^*\sigma$, where K= 1,2,3,..,N is a selectable tolerance factor, preferably equal to 1, 2 or 3;
• PEAK EVENT = each i-th calculation subinterval included in the analysis interval in which the number of packet drop events RPL(i), calculated according to any one of Claims 9-12, is greater than the PEAK THRESHOLD:

$$i = Peak\;IF\;[RPL(i) \geq \mu+K^*\sigma];$$

• Occurrence = each i-th subinterval included in the selected analysis interval, within which the number of packet drop events RPL(i), calculated according to any one of Claims 10-14, is greater than the PEAK THRESHOLD, unless this is true also for the (i-1)-th subinterval:
i = Occurrence IF:

$$RPL(i) > PEAK\;THRESHOLD\;AND\;RPL(i\text{-}1) \leq PEAK\;THRESHOLD.$$

14. Method according to the preceding claim, **characterized in that**, for each packet technology-based link of the selected network part which does not conform to the Congestion KPI, the step for outputting a result for the Congestion KPI comprises providing, in the detailed result, the total number of Occurrency events detected in the selected analysis interval.

15. Method according to any one of the preceding claims, **characterized in that** said performance counters selected for defining the at least one $KPI_{TDM}$ comprise one or more from among the Errored Seconds, ES, Unavailable Seconds, UAS, and Severely Errored Seconds, SES, counters.

16. Method according to the preceding claims, **characterized in that** the at least one $KPI_{TDM}$ comprises an Unavailability KPI defined and calculated on the basis of one or more of the ES, UAS and SES counters detected at the measurement point on the radio reception interface of the RX apparatus in the respective direction of transmission (uplink;downlink) of the link.

17. Method according to the preceding claim, **characterized in that** the Unavailability KPI is defined as a set of one or more - preferably all - of the following three parameters, functions of the ES, SES and UAS counters:

$$\text{Quality}_{\text{ES}} = \left[ \frac{(60*60*24*30 - ES_M)}{60*60*24*30} \right] *100$$

$$\text{Quality}_{\text{SES}} = \left[ \frac{(60*60*24*30 - SES_M)}{60*60*24*30} \right] *100$$

$$\text{Quality}_{\text{UAS}} = \left[ \frac{(60*60*24*365 - UAS_M)}{60*60*24*365} \right] *100$$

wherein:

$ES_M$ = maximum overall monthly value of the ES counter within the selected analysis interval;
$SES_M$ = maximum overall monthly value of the SES counter within the selected analysis interval;
$UAS_M$ = maximum overall annual value of the UAS counter within the selected analysis interval.

18. Method according to the preceding claim, wherein, for each TDM technology-based link, the step of calculating the Unavailability KPI envisages calculating the one or more parameters defined $\text{Quality}_{\text{ES}}$, $\text{Quality}_{\text{SES}}$ and $\text{Quality}_{\text{UAS}}$ on the basis of the data relating to the respective ES, SES, UAS counters detected at the measurement point on the radio reception interface of the RX apparatus and relative to the selected analysis interval, the calculation being performed in both the transmission directions.

19. Method according to the preceding claim, wherein the step of defining at least one rule for evaluating the conformity for the Unavailability KPI envisages the definition of an
Availability Threshold = percentage points of availability of the link for the selected analysis interval,
and the automatic conversion of said Availability Threshold into corresponding thresholds for the one or more parameters defined $\text{Quality}_{\text{ES}}$, $\text{Quality}_{\text{SES}}$ and $\text{Quality}_{\text{UAS}}$:

• $\text{Threshold}_{\text{ES}}$ = availability percentage with respect to one month, for the ES values
= 60*60*24*30*(100 - Availability threshold)/100
• $\text{Threshold}_{\text{SES}}$ = availability percentage threshold with respect to one month, for the SES values
= 60*60*24*30*(100 - Availability threshold)/100
• $\text{Threshold}_{\text{UAS}}$ = availability threshold with respect to one year, for the UAS values
= 60*60*24*30*365*(100 - Availability threshold) /100.

20. Method according to the preceding claim, wherein, for each TDM technology-based link of the selected network part and for each transmission direction (uplink;downlink), the step of checking the conformity of the Unavailability KPI calculated is performed according to the following rule:

$$\text{IF Quality}_{ES} > \text{Threshold}_{ES}$$

$$\text{and/or}$$

$$\text{IF Quality}_{SES} > \text{Threshold}_{ES}$$

$$\text{and/or}$$

$$\text{IF Quality}_{UAS} > \text{Threshold}_{ES}$$

then: the Unavailability KPI calculated for the link does not conform.

21. Method according to any one of the preceding claims, wherein said performance counters selected for defining the at least one $\text{KPI}_{ETH}$ comprise the etherHistoryUtilization counter.

22. Method according to any one of the preceding claims, wherein the step of defining at least one $\text{KPI}_{eth}$ comprises the definition of a Utilization KPI, defined as the average use of the radio interface of the transmission apparatus of a link over the entire analysis interval and in both transmission directions (uplink;downlink) of the link.

23. Method according to the preceding claim, wherein, for links of the selected network part operating on an Ethernet protocol, the Utilization KPI is calculated on the basis of an etherHistoryUtilization counter detected at the radio interface of the transmission apparatus of the link,
the Utilization KPI being defined as the sum of the values of said etherHistoryUtilization counter in each measurement period included in the analysis interval divided by the number of measurement periods included in the analysis and wherein the calculation is performed in both transmission directions.

24. Method according to Claims 21-23, wherein the step of defining at least one rule for evaluation of the conformity for the Utilization KPI envisages defining a threshold equal to the average maximum use in percentage points during the single measurement period in the analysis time interval; and wherein the step of checking the conformity of the Utilization KPI envisages a comparison between the KPI calculated and the threshold defined, for each transmission direction (uplink;downlink) on which the Utilization KPI is calculated.

25. Method according to any one of the preceding claims, wherein the step of defining at least one $\text{KPI}_{ETH}$ envisages the definition of a Busy Hour Utilization KPI, defined as the average hourly use of the link during the 8 monthly hours of greatest use in both transmission directions (uplink;downlink) of the link.

26. Method according to the preceding claim, **characterized in that** this average hourly use during the 8 monthly hours with greatest use value is defined and calculated on the basis of the Ethernet performance counter etherHistoryUtilization.

27. Method according to the preceding claim, wherein, for each Ethernet technology-based link of the selected network part and for each transmission directions (uplink;downlink) of the link, calculation of the Busy Hour Utilization KPI comprises the following steps:

   - averaging over one hour the values of the etherHistoryUtilization counter relating to the analysis interval and acquired on the radio interface of the TX apparatus of the link with a defined measurement period;
   - selecting the etherHistoryUtilization counter averaged values of the 8 monthly hours with greatest hourly average;
   - calculating the hourly average over said 8 monthly hours with greatest average hourly use;

and wherein, if said analysis interval defined is different from one month, the step of calculating the Busy Hour Utilization KPI envisages the calculation of a number of hours with greatest hourly average proportioned to the number of hours in the analysis interval selected
and the calculation of the average hourly use over said number of hours with greatest hourly average.

28. Method according to any one of Claims 25-27, wherein the step of defining at least one rule for evaluation of the conformity for the Busy Hour Utilization KPI envisages defining a threshold equal to the maximum average hourly use acceptable in the hours with greatest hourly average, in percentage points; and wherein

the step of checking the conformity of the Busy Hour Utilization KPI envisages a comparison between the Busy Hour Utilization KPI calculated and the threshold defined, for each transmission direction (uplink;downlink) on which the KPI is calculated.

29. Method according to any one of the preceding claims, **characterized in that** it comprises a step of outputting a result of the analysis performed, in the form of:

  - a detailed result which comprises, for each KPI defined, at least one list or table that can be consulted by the user and in which all those links which do not conform to the said KPI are identified;
  - an overall result for the analysed network part which indicates, for each KPI defined, the percentage of links analysed that do not conform to the KPI defined;

30. Method according to the preceding claim, wherein the step of outputting a result of the analysis performed also comprises displaying the progression for each transmission direction (downlink and uplink) in the analysis interval of one or more counters used for the definition and the calculation of the at least one $KPI_{TDM}$ $KPI_{ETH}$, preferably of all said counters.

31. Method according to any one of the preceding claims, **characterized in that** it comprises a step of predicting the future performance trend of at least one link of the selected network part, carried out by projecting the tendential progression of one or more KPI calculated for the link, preferably by means of data interpolation techniques, more preferably by means of linear regression.

32. Method according to any one of the preceding claims, wherein the at least one $KPI_{ETH}$ defined are also calculated for at least one optical fibre link of the selected network part, assuming the variable transport capacity of the link to be always maximum.

33. System (3000) for monitoring and analysing a telecommunication transport network for telecommunications, the transport network comprising:

  - at least one two-way point-to-point radio link composed of two radio transceiver apparatus, each apparatus:

    -- being uniquely identified in the network by a respective identifier;
    -- operating using Time-division multiplexing TDM or packet transport technology and
    -- having respective I/O interfaces where measurement points are present for acquiring performance data, and
    -- having performance counters for saving the data acquired;

  - at least one system (NMS1;NMS2) for monitoring the transceiver apparatus of the transport network;

  wherein the transceiver apparatus of each radio link of the network are associated with one of said at least one monitoring system (NMS1;NMS2) for the transceiver apparatus of the transport network, and wherein each monitoring system (NMS1;NMS2) is provided with a database for saving the data of performance counters acquired by the apparatus with which the monitoring system is associated;
  the system (3000) for monitoring and analysing the telecommunication transport network comprising:

    - a processing unit associated with at least one memory adapted to save rules for:
    - defining at least one key performance indicator, $KPI_{TDM}$, for the TDM technology-based links, each $KPI_{TDM}$ being defined on the basis of a predefined number of performance counters selected from among those of the transceiver apparatus of the respective link saved and stored in the database of the respective monitoring system ($NMS_1$,$NMS_2$);
    - defining at least one key performance indicator, $KPI_{ETH}$, for the packet technology-based links, each $KPI_{ETH}$ being defined on the basis of a predefined number of performance counters selected from among those of the transceiver apparatus of the respective link, saved and stored in the database of the respective monitoring system ($NMS_1$,$NMS_2$);
    - evaluating the conformity of each link of a network part to be analysed with the corresponding at least one key performance indicator KPI defined;

  the processing unit being connected to:

- an analysis database (3001) adapted to be populated/updated with data downloaded from the databases of the monitoring systems (NMS$_1$,NMS$_2$) of the transport network and relating to those counters on the basis of which the at least one KPI$_{TDM}$ and the at least one KPI$_{ETH}$ are defined;
- at least one module for interfacing with the transport network (NETWORK INTERFACE) configured to link with the at least one network monitoring system, NMS, of the transport network for downloading the data for populating/updating the analysis database and receiving the alarms relating to the transport network;
- at least one user interface, configured to allow the definition and/or choice by a user of the conformity evaluation rules and of:

- at least a part of the transport network of interest for the analysis and comprising at least one radio link; and of
- a time interval for analysis of the selected part of the transport network; the processing unit being configured to
- command the updating, at least up to the selected analysis time interval included, of the analysis database with the data from the database(s) of the at least one system (NMS$_1$,NMS$_2$) for monitoring the apparatus of the transport network;
- calculate, for each TDM technology-based link belonging to the selected transport network part, the at least one KPI$_{TDM}$ defined, on the basis of the data contained in the analysis database and relative to said selected counters of the apparatus of the link;
- calculate, for each packet technology-based link belonging to the selected transport network part, the at least one KPI$_{ETH}$ defined, on the basis of the data contained in the analysis database and relative to said selected counters of the apparatus of the link;
- check, for each link of the selected network part, the conformity of the at least one KPI calculated for the link, according to said at least one defined evaluation rule.

**Patentansprüche**

1. Verfahren zum Überwachen und Analysieren eines Transportnetzwerks zur Telekommunikation, wobei das Transportnetzwerk aufweist:

- mindestens eine aus zwei Funk-Sender/Empfänger-Vorrichtungen bestehende Zwei-Wege-Punkt-zu-Punkt-Funkverbindung, wobei jede Vorrichtung:

-- im Netzwerk mittels einer jeweiligen Kennung eindeutig identifiziert ist;
-- unter Verwendung von Zeitteilungsmultiplex-, TDM-, oder Pakettransport-Technik arbeitet und
-- entsprechende I/O-Schnittstellen aufweist, an denen Messpunkte zum Erfassen von Leistungsdaten vorhanden sind, und
-- Leistungszähler zum Sichern der erfassten Daten aufweist;

- mindestens ein System (NMS$_1$; NMS$_2$) zum Überwachen der Sender/Empfänger-Vorrichtung des Transportnetzwerks;

wobei
die Sender/Empfänger-Vorrichtung jeder Funkverbindung des Netzwerks einem des mindestens einen Systems (NMS$_1$; NMS$_2$) zum Überwachen der Sender/Empfänger-Vorrichtung des Transportnetzwerks zugeordnet sind, und wobei
jedes Überwachungssystem mit einer Datenbank zum Sichern der Daten von Leistungszählern ausgestattet ist, die mittels der Vorrichtung, der das Überwachungssystem zugeordnet ist, erfasst wurden;
wobei das Verfahren die Schritte aufweist:

- Definieren mindestens eines Schlüsselleistungsindikators, KPI$_{TDM}$, für die TDM-Technik-basierten Verbindungen, wobei jeder KPI$_{TDM}$ basierend auf einer vorbestimmten Anzahl von Leistungszählern definiert ist, die aus denjenigen der Sender/Empfänger-Vorrichtung der jeweiligen Verbindung ausgewählt wurden, die in der Datenbank des jeweiligen Überwachungssystems (NMS$_1$; NMS$_2$) gesichert und gespeichert wurden;
- Definieren mindestens eines Schlüsselleistungsindikators, KPI$_{ETH}$, für die Packet-Technik-basierten Verbindungen, wobei jeder KPI$_{ETH}$ basierend auf einer vorbestimmten Anzahl von Leistungszählern definiert ist, die aus denjenigen der Sender/Empfänger-Vorrichtung der jeweiligen Verbindung ausgewählt wurden, die in der Datenbank des jeweiligen Überwachungssystems (NMS$_1$; NMS$_2$) gesichert und gespeichert wurden;

- Bereitstellung einer Analyse-Datenbank (3001), die geeignet ist, dass Daten in sie eingepflegt/ in ihr aktualisiert werden, die aus den Datenbanken des Überwachungssystems (NMS$_1$; NMS$_2$) des Transportnetzes heruntergeladen wurden und betreffend mindestens diejenigen Zählern basierend auf denen der KPI$_{TDM}$ und der KPI$_{ETH}$ definiert sind;

- Auswählen mindestens eines Teils des Transportnetzwerks, das für die Analyse von Interesse ist und mindestens eine Funkverbindung aufweist;

- Auswählen eines Zeitintervalls zur Analyse des ausgewählten Teils des Transportnetzwerks;

- Definieren mindestens einer Regel zum Auswerten der Übereinstimmung jeder Verbindung des zu analysierenden Netzwerkteils mit dem entsprechenden mindestens einen definierten Schlüsselleistungsindikator KPI;

- Aktualisieren der Analysedatenbank mit den Daten aus den Datenbanken des mindestens einen Systems (NMS$_1$, NMS$_2$) zum Überwachen der Vorrichtung des Transportnetzwerks bis mindestens einschließlich des ausgewählten Analysezeitintervalls;

- für jede auf der TDM-Technik basierende Verbindung, die zu dem ausgewählten Transportnetzwerkteil gehört: Berechnen des mindestens einen definierten KPI$_{TDM}$ basierend auf den Daten, die in der Analysedatenbank enthalten sind und betreffend die ausgewählten Zähler der Vorrichtung der Verbindung;

- für jede auf der Paket-Technik basierende Verbindung, die zu dem ausgewählten Transportnetzwerkteil gehört: Berechnen des mindestens einen definierten KPI$_{ETH}$ basierend auf den Daten, die in der Analysedatenbank enthaltenen sind und betreffend die ausgewählten Zähler der Vorrichtung der Verbindung;

- für jede Verbindung des ausgewählten Netzwerkteils: Überprüfen der Übereinstimmung des mindestens einen KPI, der für die Verbindung berechnet wurde, gemäß der Auswertungsregel.

2. Verfahren nach den vorhergehenden Ansprüchen, wobei der Schritt des Definierens von mindestens einer Regel zum Auswerten der Übereinstimmung jeder Verbindung, die analysiert wird, mit dem entsprechenden KPI das Definieren von mindestens einem Schwellenwert für jeden definierten KPI aufweist; und wobei der Schritt des Überprüfens der Übereinstimmung jeder Verbindung mit dem entsprechenden einen berechneten KPI einen Vergleich von mindestens einem für die Verbindung berechneten Wert mit mindestens einem jeweiligen definierten Schwellenwert aufweist.

3. Verfahren nach Anspruch 2, **dadurch gekennzeichnet, dass** der Schritt des Definierens mindestens eines Schwellenwerts für jeden definierten KPI die Definition unterschiedlicher Schwellenwerte für verschiedene Verbindungskategorien, vorzugsweise unterschiedliche Schwellenwerte für Ende-Typ-Verbindungen, und für Speise-Typ-Verbindungen und/oder einen Schwellenwert für jede Verbindung des ausgewählten Netzwerkteils vorsieht.

4. Verfahren nach einem der vorhergehenden Ansprüche, wobei mindestens einer der Schlüsselleistungsindikatoren mittels einer Kreuzanalyse von zwei oder mehr Leistungszählern definiert und/oder berechnet wird, die aus denjenigen ausgewählt wurden, die durch die jeweilige Verbindung bildende Funk-Sender/Empfänger-Vorrichtung erhalten werden.

5. Verfahren nach einem der vorhergehenden Ansprüche, wobei zur Definition und/oder Berechnung eines oder mehrerer Schlüsselleistungsindikatoren das Analysezeitintervall in Berechnungsunterintervalle unterteilt wird, vorzugsweise mit einer Länge, Länge[i], die der vorgeschriebenen Messperiode zum Aktualisieren der Messungen der Leistungszähler, besonders bevorzugt gleich 15 Minuten entspricht.

6. Verfahren nach einem der vorhergehenden Ansprüche, **dadurch gekennzeichnet, dass** die zum Definieren des mindestens einen KPI$_{ETH}$ ausgewählten Leistungszähler EtherStatsdropEvents-, und adaptive Kodierungs- und Modulations-, ACM-, Zähler aufweist.

7. Verfahren nach einem der vorhergehenden Ansprüche, wobei der mindestens eine KPI$_{ETH}$-Indikator einen Überlastungs-KPI aufweist, der basierend auf der Anzahl von Paketverwerfungsereignissen auf der Verbindung in beiden Übertragungsrichtungen (Aufwärtsverbindung; Abwärtsverbindung) und der variablen Transportkapazität definiert ist, die auf der Verbindung in einem Berechnungszeitunterintervall verwendet wird, das den Moment des Paketverwerfungsereignisses aufweist.

8. Verfahren nach dem vorhergehenden Anspruch, wobei zur Definition und Berechnung des Überlastungs-KPI Alarme, die von dem Gerät der Verbindung gesendet und von dem Überwachungssystem (NMS$_1$; NMS$_2$) in dem ausgewählten Analysezeitintervall empfangen wurden, ebenfalls berücksichtigt werden.

9. Verfahren nach Anspruch 7 oder 8, **dadurch gekennzeichnet, dass** der Überlastungs-KPI als Funkpaketverlust, RPL, definiert ist, wobei

$$RPL = \sum_i RPL(i)$$

wobei i = jedes Berechnungsunterintervall, das in dem Analyseintervall enthalten ist,
RPL(i) = Gesamtzahl von Ereignissen, bei denen ein oder mehrere aufeinanderfolgende Pakete, die an den Eingangsschnittstellen einer Übertragungsvorrichtung der Verbindung empfangen wurden und zur Übertragung auf der Verbindung bestimmt sind, nicht von der Vorrichtung übertragen wurden, berechnet in dem i-ten Berechnungsunterintervall, welches das Analyseintervall bildet und für beide Richtungen der Verbindung (Aufwärtsverbindung; Abwärtsverbindung), und dadurch, dass:
RPL (i) nur dann größer als Null angesehen wird, wenn für das gesamte betrachtete Berechnungsunterintervall und in der jeweiligen Übertragungsrichtung (Aufwärtsverbindung; Abwärtsverbindung) die Funkübertragungsvorrichtung der Verbindung mit ihrer maximalen Modulation betrieben wird.

10. Verfahren nach dem vorhergehenden Anspruch, **dadurch gekennzeichnet, dass**

- die Auswertung der Modulation, bei der die Übertragungsvorrichtung TX der ausgeführten Verbindung in dem i-ten Berechnungsunterintervall und in der jeweiligen Übertragungsrichtung (Aufwärtsverbindung; Abwärtsverbindung) mittels des jeweiligen ACM-Zählers $ACM_{Aufwärtsverbindung}(i)$, $ACM_{Abwärtsverbindung}(i)$ ausgeführt wird;
- die Länge des Berechnungsunterintervalls gleich der Messperiode des ACM-Zählers, vorzugsweise gleich 15 Minuten gewählt wird;

- und dadurch, dass RPL wie folgt definiert und berechnet wird: $RPL = \sum_i RPL(i)$:

$$[ACM(i) = \text{Länge}[i]] =$$
$$(\sum_i RPL_{Aufwärtsverbindung}(i): [ACM_{Aufwärtsverbindung}(i) = \text{Länge}[i]] +$$
$$\sum_i RPL_{Abwärtsverbindung}(i): [ACM_{Abwärtsverbindung}(i) = \text{Länge}[i]]).$$

11. Verfahren nach dem vorhergehenden Anspruch, **dadurch gekennzeichnet, dass** die ausgewählten Zähler für Funkverbindungen, die mit dem Ethernet-Protokoll arbeiten, der EtherStatsDropEvents-Zähler und der ACM-Zähler sind, und dadurch, dass für jedes i-te Berechnungsunterintervall, welches das Analyseintervall bildet, $RPL_{Aufwärtsverbindung}(i)$ und $RPL_{Abwärtsverbindung}(i)$ wie folgt definiert und berechnet werden:

$$RPL_{Aufwärtsverbindung}(i) = \sum_j EtherStatsDropEvents (i)$$

wobei j = alle Messpunkte der TX-Vorrichtung der Aufwärtsverbindung-Verbindung und

$$RPL_{Abwärtsverbindung}(i) = \sum_j EtherStatsDropEvents (i)$$

wobei j = alle Messpunkte der TX-Vorrichtung der Abwärtsverbindung-Verbindung.

12. Verfahren nach einem der Ansprüche 9-11, **dadurch gekennzeichnet, dass** für jede auf der Paket-Technik-basierende Verbindung des zur Analyse ausgewählten Netzwerkteils während der Berechnung des Überlastungs-KPI, RPL (i) = 0 gesetzt wird, wenn in dem i-ten Berechnungsunterintervall, mindestens ein Alarm von mindestens einer Vorrichtung der Verbindung detektiert wurde.

13. Verfahren nach einem der Ansprüche 9-12, wobei die Definition und die Berechnung des Überlastungs-KPI die Definition und Berechnung der folgenden weiteren Parameter für jede auf Paket-Technik basierende Verbindung und für jede Richtung (Aufwärtsverbindung; Abwärtsverbindung) basierend auf den Paketverwerfungsereignis-RPL-Daten auf der Verbindung im ausgewählten Analysezeitintervall aufweist:

• AVG RPL = durchschnittliche Anzahl von Paketverwerfungsereignissen auf der Verbindung in dem ausgewählten Analysezeitintervall, wobei diese Ereignisse in der Berechnung nur berücksichtigt werden, wenn in dem entsprechenden Berechnungsunterintervall die Verbindung bei maximaler Modulation betrieben wurde:

$$AVG\ RPL = \mu = E[\textstyle\sum_i[RPL(i): ACM(i) = \text{Länge}[i]]$$

• σ = Standardabweichung des Verlaufs der Paketverwerfungsereignisse im ausgewählten Zeitintervall, jeweils nur in der Berechnung berücksichtigt, wenn in dem entsprechenden Berechnungsunterintervall die Verbindung bei der maximalen Modulation betrieben wird:

$$\sigma = STD\ DEV[\textstyle\sum_i[RPL(i): ACM(i) = \text{Länge}[i]]$$

• PEAK THRESHOLD = μ + K * σ, wobei K = 1, 2, 3, ..., N ein auswählbarer Toleranzfaktor, bevorzugt gleich 1, 2 oder 3 ist;
• PEAK EVENT = jedes i-te Berechnungsunterintervall, das in dem Analyseintervall enthalten ist, in dem die Anzahl von Paketverwerfungsereignissen RPL (i), berechnet nach einem der Ansprüche 9-12, größer ist als der PEAK THRESHOLD:

$$i = Peak\ WENN\ [RPL(i) \geq \mu + K * \sigma];$$

• Auftreten = jedes i-te Unterintervall, das in dem ausgewählten Analyseintervall enthalten ist, in dem die Anzahl von Paketverwerfungsereignissen RPL (i), berechnet nach einem der Ansprüche 10-14, größer als der PEAK THRESHOLD ist, es sei denn, dies gilt auch für das (i-1)-te Unterintervall:

$$i = Auftreten\ WENN:$$

RPL(i) > PEAK THRESHOLD UND RPL(i-1) ≤ PEAK THRESHOLD.

14. Verfahren nach dem vorhergehenden Anspruch, **dadurch gekennzeichnet, dass** für jede auf Paket-Technik basierende Verbindung des ausgewählten Netzwerkteils, die nicht dem Überlastungs-KPI entspricht, der Schritt zum Ausgeben eines Ergebnisses für den Überlastungs-KPI Bereitstellen, in dem detaillierten Ergebnis, der Gesamtzahl der im ausgewählten Analyseintervall detektierten Auftrittsereignisse aufweist.

15. Verfahren nach einem der vorhergehenden Ansprüche, **dadurch gekennzeichnet, dass** die zum Definieren des mindestens einen $KPI_{TDM}$ ausgewählten Leistungszähler einen oder mehrere Zähler von Fehler-Sekunden, ES, Nichtverfügbar-Sekunden, UAS-, und Schwerer-Fehler-Sekunden, SES aufweist.

16. Verfahren nach dem vorhergehenden Anspruch, **dadurch gekennzeichnet, dass** der mindestens eine $KPI_{TDM}$ einen Nichtverfügbar-KPI aufweist, der basierend auf einem oder mehreren ES-, UAS- und SES-Zähler, die am Messpunkt auf der Funkempfangsschnittstelle der RX-Vorrichtung in der jeweiligen Übertragungsrichtung (Aufwärtsverbindung; Abwärtsverbindung) der Verbindung erfasst werden, definiert und berechnet wird.

17. Verfahren nach dem vorhergehenden Anspruch, **dadurch gekennzeichnet, dass** der Nichtverfügbar-KPI als ein Satz von einem oder mehreren - vorzugsweise von allen - der folgenden drei Parameter, Funktionen der ES-, SES- und UAS-Zähler, definiert ist:

$$\text{Qualität}_{ES} = \left[\frac{(60*60*24*30 - ES_M)}{60*60*24*30}\right] * 100$$

$$\text{Qualität}_{SES} = \left[\frac{(60*60*24*30 - SES_M)}{60*60*24*30}\right] * 100$$

$$\text{Qualität}_{UAS} = \left[\frac{(60*60*24*365 - UAS_M)}{60*60*24*365}\right] * 100$$

wobei:

$ES_M$ = maximaler monatlicher Gesamtwert des ES-Zählers innerhalb des ausgewählten Analyseintervalls;

$SES_M$ = maximaler monatlicher Gesamtwert des SES-Zählers innerhalb des ausgewählten Analyseintervalls;
$UAS_M$ = maximaler jährlicher Gesamtwert des AUS-Zählers innerhalb des ausgewählten Analyseintervalls.

18. Verfahren nach dem vorhergehenden Anspruch, wobei für jede auf TDM-Technik-basierende Verbindung der Schritt des Berechnens des Nichtverfügbar-KPI das Berechnen des einen oder der mehreren definierten Parameter Qualität$_{ES}$, Qualität$_{SES}$ und Qualität$_{UAS}$ basierend auf den Daten bezüglich der jeweiligen ES, SES, UAS-Zähler vorsieht, die an dem Messpunkt auf der Funkempfangsschnittstelle der RX-Vorrichtung und betreffend das ausgewählte Analyseintervall erfasst werden, wobei die Berechnung in beide Verbindungsrichtungen durchgeführt wird.

19. Verfahren nach dem vorhergehenden Anspruch, wobei der Schritt des Definierens mindestens einer Regel zum Auswerten der Übereinstimmung für den Nichtverfügbar-KPI vorsieht die Definition eines
Verfügbarkeitsschwellenwert = Prozentpunkte der Verfügbarkeit der Verbindung für das ausgewählte Analyseintervall
und die automatische Umwandlung des Verfügbarkeitsschwellenwerts in entsprechende Schwellenwerte für den einen oder die mehreren definierten Parameter Qualität$_{ES}$, Qualität$_{SES}$, Qualität$_{UAS}$:

- 

$$. \text{Schwellenwert}_{ES} = \text{Verfügbarkeitsprozentsatz in Bezug auf einen Monat für den ES-Wert}$$

$$= 60 * 60 * 24 * 30 * (100 - \text{Verfügbarkeitsschwellenwert})/100$$

- 

$$. \text{Schwellenwert}_{SES} = \text{Verfügbarkeitsprozentsatz in Bezug auf einen Monat für den SES-Wert}$$

$$= 60 * 60 * 24 * 30 * (100 - \text{Verfügbarkeitsschwellenwert})/100$$

$$\text{Schwellenwert}_{UAS} = \text{Verfügbarkeitsgrenzwert in Bezug auf ein Jahr für den UAS-Wert}$$

$$= 60 * 60 * 24 * 30 * 365 * (100 - \text{Verfügbarkeitsschwellenwert})/100.$$

20. Verfahren nach dem vorhergehenden Anspruch, wobei für jede auf TDM-Technik-basierende Verbindung des ausgewählten Netzwerkteils und für jede Übertragungsrichtung (Aufwärtsverbindung; Abwärtsverbindung) der Schritt des Überprüfens der Übereinstimmung des berechneten Nichtverfügbarkeits-KPI gemäß der folgenden Regel durchgeführt wird:

$$\text{WENN Qualität}_{ES} > \text{Schwellenwert}_{ES}$$

und/oder

$$\text{WENN Qualität}_{SES} > \text{Schwellenwert}_{ES}$$

und/oder

$$\text{WENN Qualität}_{UAS} > \text{Schwellenwert}_{ES}$$

dann: der für die Verknüpfung berechnete Nichtverfügbar-KPI stimmt nicht überein.

21. Verfahren nach einem der vorhergehenden Ansprüche, wobei die zum Definieren des mindestens einen KPI$_{ETH}$ ausgewählten Leistungszähler den etherHistoryUtilization-Zähler umfassen.

22. Verfahren nach einem der vorhergehenden Ansprüche, wobei der Schritt des Definierens mindestens eines $KPI_{eth}$ die Definition eines Nutzungs-KPI aufweist, der als die durchschnittliche Nutzung der Funkschnittstelle der Übertragungsvorrichtung einer Verbindung über das gesamte Analyseintervall und in beide Übertragungsrichtungen (Aufwärtsverbindung; Abwärtsverbindung) der Verbindung definiert ist.

23. Verfahren nach dem vorhergehenden Anspruch, wobei für Verbindungen des ausgewählten, auf einem Ethernet-Protokoll ausgeführten Netzwerkteils der Nutzungs-KPI basierend auf dem an der Funkschnittstelle des Übertragungsvorrichtung der Verbindung detektierten etherHistoryUtilization-Zählers berechnet wird, wobei der Nutzungs-KPI als die Summe der Werte des etherHistoryUtilization-Zählers jeder in dem Analyseintervall enthaltenden Messperiode definiert ist, geteilt durch die Anzahl der in der Analyse enthaltenen Messperioden, und wobei die Berechnung in beide Übertragungsrichtungen durchgeführt wird.

24. Verfahren nach den Ansprüchen 21-23, wobei der Schritt des Definierens mindestens einer Regel zur Auswertung der Übereinstimmung des Nutzungs-KPI vorsieht, einen Schwellenwert gleich der durchschnittlichen maximalen Verwendung in Prozentpunkten während der einzelnen Messperiode im Analysezeitintervall zu definieren; und wobei der Schritt des Überprüfens der Übereinstimmung des Nutzungs-KPI einen Vergleich zwischen dem berechneten KPI und dem definierten Schwellenwert für jede Berechnungsrichtung (Aufwärtsverbindung; Abwärtsverbindung), auf welcher der Nutzungs-KPI berechnet wurde, vorsieht.

25. Verfahren nach einem der vorhergehenden Ansprüche, wobei der Schritt des Definierens mindestens eines $KPI_{ETH}$ die Definition eines Hauptverkehr-Nutzungs-KPI vorsieht, definiert als der Mittelwert stündlicher Nutzung der Verbindung während der 8 monatlichen Stunden der größten Nutzung in beide Übertragungsrichtungen (Aufwärtsverbindung; Abwärtsverbindung) der Verbindung.

26. Verfahren nach dem vorhergehenden Anspruch, **dadurch gekennzeichnet, dass** dieser Mittelwert stündlicher Nutzung während der 8 monatlichen Stunden mit dem größten Nutzungswert auf der Basis des Ethernet-Leistungszählers, etherHistoryUtilization, definiert und berechnet wird.

27. Verfahren nach dem vorhergehenden Anspruch, wobei für jede auf Ethernet-Technik-basierende Verbindung des ausgewählten Netzwerkteils und für jede Übertragungsrichtung der Verbindung (Aufwärtsverbindung; Abwärtsverbindung) die Berechnung des Hauptverkehr-Nutzungs-KPI die folgenden Schritte umfasst:

   - Mitteln der Werte des etherHistoryUtilization-Zählers über eine Stunde, die sich auf das Analyseintervall beziehen und auf der Funkschnittstelle des TX-Geräts der Verbindung mit einer definierten Messperiode erfasst werden;
   - Auswählen der gemittelten etherHistoryUtilization-Zählerwerte der 8 monatlichen Stunden mit dem größten Stundenmittel;
   - Berechnen des stündlichen Mittelwerts über die 8 monatlichen Stunden mit dem größten stündlichen Mittelwert;

   und wobei, falls das definierte Analyseintervall kein Monat ist, der Schritt des Berechnens des Hauptverkehr-Nutzungs-KPI die Berechnung von einer Anzahl von Stunden mit größtem stündlichen Mittelwert proportioniert zu der Anzahl von Stunden in dem ausgewählten Analyseinterwahl vorsieht
   und die Berechnung des Mittelwerts stündlicher Nutzung über die Anzahl der Stunden mit größtem stündlichen Mittelwert.

28. Verfahren nach einem der Ansprüche 25-27, wobei der Schritt des Definierens von mindestens einer Regel zur Auswertung der Übereinstimmung für den Hauptverkehr-Nutzungs-KPI vorsieht, einen Schwellenwert gleich dem maximalen Mittelwert stündlicher Nutzung, der in den Stunden mit größtem stündlichen Mittelwert akzeptabel ist, in Prozentpunkten zu definieren; und wobei
der Schritt des Überprüfens der Übereinstimmung des Hauptverkehr-Nutzungs-KPI einen Vergleich zwischen dem berechneten Hauptverkehr-Nutzungs-KPI und dem definierten Schwellenwert für jede Übertragungsrichtung (Aufwärtsverbindung; Abwärtsverbindung) vorsieht.

29. Verfahren nach einem der vorhergehenden Ansprüche, **dadurch gekennzeichnet, dass** es einen Schritt aufweist zum Ausgeben eines Ergebnisses der durchgeführten Analyse in Form von:

   - eines detaillierten Ergebnisses, für jeden definierten KPI, das mindestens eine Liste oder Tabelle aufweist, die vom Nutzer konsultiert werden kann und in der alle diejenigen Verbindungen identifiziert sind, die nicht mit dem KPI übereinstimmen;
- einem Gesamtergebnis für den analysierten Netzwerkteil, für jeden definierten KPI, das den Prozentsatz der analysierten Verbindungen angibt, die nicht dem definierten KPI entspricht;

**30.** Verfahren nach dem vorhergehenden Anspruch, wobei der Schritt des Ausgebens eines Ergebnisses der durchgeführten Analyse auch das Anzeigen des Fortschreitens für jede Übertragungsrichtung (Abwärtsverbindung und Aufwärtsverbindung) in dem Analyseintervall von einem oder mehreren Zählern, die zur Definition und Berechnung des mindestens einen $KPI_{TDM}$, $KPI_{ETH}$, genutzt wurden, vorzugsweise aller genannten Zähler, vorsieht.

**31.** Verfahren nach einem der vorhergehenden Ansprüche, **dadurch gekennzeichnet, dass** es einen Schritt des Vorhersagens des zukünftigen Leistungstrends mindestens einer Verbindung des ausgewählten Netzwerkteils aufweist, der durch Projizieren des tendenziellen Fortschreitens eines oder mehrerer für die Verbindung berechneter KPIs, vorzugsweise mittels Dateninterpolationstechniken, besonders bevorzugt mittels linearer Regression durchgeführt wird.

**32.** Verfahren nach einem der vorhergehenden Ansprüche, wobei mindestens der eine definierte $KPI_{ETH}$ auch für mindestens eine optische Faserverbindung des ausgewählten Netzwerkteils berechnet wird, wobei angenommen wird, dass die variable Transportkapazität der Verbindung immer maximal ist.

**33.** System (3000) zum Überwachen und Analysieren eines Telekommunikationstransportnetzwerks zur Telekomunikation, wobei das Transportnetzwerk aufweist:

- mindestens eine aus zwei Funk-Sender/Empfänger-Vorrichtungen bestehende Zwei-Wege-Punkt-zu-Punkt-Funkverbindung, wobei jede Vorrichtung:

-- im Netzwerk mittels einer entsprechenden Kennung eindeutig identifiziert ist;
-- unter Verwendung von Zeitteilungsmultiplex-, TDM-, oder Paket-Transport-Technik arbeitet und
-- entsprechende I/O-Schnittstellen aufweist, an denen Messpunkte zur Erfassung von Leistungsdaten vorhanden sind, und
-- Leistungszähler zum Sichern der erfassten Daten aufweist;

- mindestens ein System ($NMS_1$; $NMS_2$) zum Überwachen der Sender/Empfänger-Vorrichtung des Transportnetzwerks;

wobei
die Sender/Empfänger-Vorrichtung von jeder Funkverbindung des Netzwerks einem des mindestens einen Systems ($NMS_1$; $NMS_2$) zur Überwachung der Sender/Empfänger-Vorrichtung des Transportnetzwerks zugeordnet sind, und wobei
jedes Überwachungssystem mit einer Datenbank zum Speichern der Daten von Leistungszählern ausgestattet ist, die mittels der Vorrichtung mit dem das Überwachungssystem verbunden ist, erfasst werden;
wobei das System (3000) zum Überwachen und Analysieren des Telekommunikationstransportnetzwerks aufweist:

- eine Verarbeitungseinheit, die mindestens einem Speicher zugeordnet ist, der dafür ausgelegt ist, Regeln zu sichern für das:

- Definieren mindestens eines Schlüsselleistungsindikators, $KPI_{TDM}$, für die TDM-Technik-basierten Verbindungen, wobei jeder $KPI_{TDM}$ basierend auf einer vorbestimmten Anzahl von Leistungszählern definiert ist, die aus denjenigen der Sender/Empfänger-Vorrichtung der jeweiligen Verbindung ausgewählt wurden, die in der Datenbank des jeweiligen Überwachungssystems ($NMS_1$; $NMS_2$) gesichert und gespeichert sind;
- Definieren mindestens eines Schlüsselleistungsindikators, $KPI_{ETH}$, für die Packet-Technik-basierten Verbindungen, wobei jeder $KPI_{ETH}$ basierend auf einer vorbestimmten Anzahl von Leistungszählern definiert ist, die aus denjenigen der Sender/Empfänger-Vorrichtung der jeweiligen Verbindung ausgewählt wird, die in der Datenbank des jeweiligen Überwachungssystems ($NMS_1$; $NMS_2$) gesichert und gespeichert sind;
- Auswertung der Übereinstimmung von jeder Verbindung eines Netzwerkteils, um mit dem entsprechenden mindestens einem definierten Schlüsselleistungsindikator KPI analysiert zu werden;

wobei die Verarbeitungseinheit verbunden ist mit:

- einer Analyse-Datenbank (3001), die geeignet ist, dass Daten in ihr eingepflegt/ in ihr aktualisiert werden, die aus den Datenbanken des Überwachungssystems (NMS$_1$; NMS$_2$) des Transportnetzes heruntergeladen wurden, und sich auf diejenigen Zähler beziehen, auf deren Basis der mindestens eine KPI$_{TDM}$ und der mindestens eine KPI$_{ETH}$ definiert wurden;

- mindestens ein Modul als Schnittstelle mit dem Transportnetzwerk (NETWORK INTERFACE), das eingerichtet ist, um mit dem mindestens einen Netzwerküberwachungssystem, NMS, des Transportnetzwerks zum Herunterladen der Daten zum Einpflegen in die/Aktualisieren in der Analysedatenbank und dem Empfangen der Alarme betreffend das Transportnetzwerk zu verbinden;

- mindestens eine Benutzerschnittstelle, die eingerichtet ist, durch einen Benutzer die Definition und/oder die Auswahl der Übereinstimmungsauswertungsregeln zu ermöglichen und von:

- mindestens einen Teil des Transportnetzwerks, das für die Analyse von Interesse ist und mindestens eine Funkverbindung aufweist; und von

- einem Zeitintervall zur Analyse des ausgewählten Teils des Transportnetzwerks; wobei die Verarbeitungseinheit eingerichtet ist, um

- das Aktualisieren, mindestens bis das ausgewählte Analysezeitintervall beinhaltet ist, der Analysedatenbank mit den Daten der Datenbank(en) von dem mindestens einem System (NMS$_1$, NMS$_2$) zur Überwachung der Vorrichtung des Transportsystems anzuordnen;

- für jede TDM-Technik basierte Verbindung, die zu dem ausgewählten Transportnetzwerkteils gehört, den mindestens einen definierten KPI$_{TDM}$, basierend auf den in der Analysedatenbank enthaltenen Daten, und der jeweiligen ausgewählten Zähler der Vorrichtung der Verbindung zu berechnen;

- für jede Packet-Technik basierte Verbindung, die zu dem ausgewählten Transportnetzwerkteils gehört, den mindestens einen definierten KPI$_{ETH}$, basierend auf den in der Analysedatenbank enthaltenen Daten, und der jeweiligen ausgewählten Zähler der Vorrichtung der Verbindung zu berechnen;

- für jede Verbindung des ausgewählten Netzwerkteils, die Übereinstimmung von dem mindestens einen für die Verbindung berechneten KPI, gemäß der mindestens einen definierten Auswertungsregel zu prüfen.


**Revendications**

1. Procédé de surveillance et d'analyse d'un réseau de transport de télécommunications, le réseau de transport comprenant :

- au moins une liaison radio bidirectionnelle poste à poste composée de deux appareils émetteurs-récepteurs radio, chaque appareil :

-- étant identifié de manière unique dans le réseau par un identifiant respectif ;

-- fonctionnant en faisant appel à une technologie de multiplexage temporel, TDM, ou à une technologie de transport par paquets, et

-- comportant des interfaces d'E/S (entrée/sortie) respectives au niveau desquelles sont présents des points de mesure permettant d'acquérir des données de performance, et

-- comportant des compteurs de performance permettant de sauvegarder les données acquises ;

- au moins un système (NMS$_1$ ; NMS$_2$) destiné à surveiller les appareils émetteurs-récepteurs du réseau de transport ;

dans lequel
les appareils émetteurs-récepteurs de chaque liaison radio du réseau sont associés à un système dudit au moins un système de surveillance (NMS$_1$ ; NMS$_2$) des appareils émetteurs-récepteurs du réseau de transport, et dans lequel
chaque système de surveillance est pourvu d'une base de données permettant de sauvegarder les données de compteurs de performance acquises par les appareils auxquels est associé le système de surveillance ;
le procédé comprenant les étapes consistant à :

- définir au moins un indicateur de performance clé, KPI$_{TDM}$, des liaisons reposant sur la technologie de TDM, chaque indicateur KPI$_{TDM}$ étant défini sur la base d'un nombre prédéfini de compteurs de performance sélectionnés parmi les compteurs de performance des appareils émetteurs-récepteurs de la liaison respective, sauvegardés et mémorisés dans la base de données du système de surveillance respectif (NMS$_1$, NMS$_2$) ;

- définir au moins un indicateur de performance clé, $KPI_{ETH}$, des liaisons reposant sur la technologie par paquets, chaque indicateur $KPI_{ETH}$ étant défini sur la base d'un nombre prédéfini de compteurs de performance sélectionnés parmi les compteurs de performance des appareils émetteurs-récepteurs de la liaison respective, sauvegardés et mémorisés dans la base de données du système de surveillance respectif ($NMS_1$ ; $NMS_2$) ;

- fournir, à une base de données d'analyse (3001) appropriée pour un remplissage/une mise à jour, des données téléchargées depuis les bases de données du système de surveillance ($NMS_1$ ; $NMS_2$) du réseau de transport et associées au moins aux compteurs sur la base desquels sont définis l'indicateur $KPI_{TDM}$ et l'indicateur $KPI_{ETH}$ ;

- sélectionner au moins une partie du réseau de transport d'intérêt pour l'analyse et comprenant au moins une liaison radio ;

- sélectionner un intervalle de temps pour l'analyse de la partie sélectionnée du réseau de transport ;

- définir au moins une règle d'évaluation de la conformité de chaque liaison de la partie de réseau devant être analysée à l'au moins un indicateur de performance clé KPI correspondant défini ;

- mettre à jour, au moins jusqu'à l'intervalle de temps d'analyse sélectionné compris, la base de données d'analyse au moyen des données provenant des bases de données de l'au moins un système ($NMS_1$ ; $NMS_2$) destiné à surveiller les appareils du réseau de transport ;

- pour chaque liaison reposant sur la technologie de TDM appartenant à la partie de réseau de transport sélectionnée : calculer l'au moins un indicateur $KPI_{TDM}$ défini, sur la base des données contenues dans la base de données d'analyse et associées auxdits compteurs sélectionnés de l'appareil de la liaison ;

- pour chaque liaison reposant sur la technologie par paquets appartenant à la partie de réseau de transport sélectionnée : calculer l'au moins un indicateur $KPI_{ETH}$ défini, sur la base des données contenues dans la base de données d'analyse et associées auxdits compteurs sélectionnés des appareils de la liaison ;

- pour chaque liaison de la partie de réseau sélectionnée : vérifier la conformité de l'au moins un indicateur KPI calculé de la liaison, conformément à ladite règle d'évaluation.

2. Procédé selon la revendication précédente, dans lequel ladite étape consistant à définir au moins une règle permettant d'évaluer la conformité de chaque liaison qui est analysée à l'indicateur KPI correspondant consiste à définir au moins une valeur seuil pour chaque KPI défini ; et dans lequel ladite étape de vérification de la conformité de chaque liaison à l'au moins un indicateur KPI correspondant calculé consiste à comparer au moins une valeur calculée de la liaison avec au moins une valeur seuil respective définie.

3. Procédé selon la revendication 2, **caractérisé en ce que** l'étape de définition d'au moins une valeur seuil de chaque indicateur KPI défini propose la définition de valeurs seuils différentes pour différentes catégories de liaisons, de préférence de valeurs seuils différentes pour des liaisons de type section locale et pour des liaisons de type liaison de connexion et/ou une valeur seuil pour chaque liaison de la partie de réseau sélectionnée.

4. Procédé selon l'une quelconque des revendications précédentes, dans lequel au moins un indicateur parmi lesdits indicateurs de performance clés est défini et/ou calculé par une analyse croisée de deux compteurs de performance, ou plus, sélectionnés parmi les compteurs de performance acquis par les appareils émetteurs-récepteurs radio formant la liaison respective.

5. Procédé selon l'une quelconque des revendications précédentes, dans lequel, pour une définition et/ou un calcul d'un ou de plusieurs des indicateurs de performance clés, l'intervalle de temps d'analyse est divisé en sous-intervalles de calcul, ayant de préférence une certaine longueur, length [i], correspondant à la période de mesure prescrite pour mettre à jour les mesures des compteurs de performance, et plus préférentiellement égale à 15 minutes.

6. Procédé selon l'une quelconque des revendications précédentes, **caractérisé en ce que** lesdits compteurs de performance sélectionnés pour définir l'au moins un indicateur $KPI_{ETH}$ comprennent des compteurs EtherStatsdropEvents et de codage et de modulation adaptatifs, ACM.

7. Procédé selon l'une quelconque des revendications précédentes, dans lequel l'au moins un indicateur $KPI_{ETH}$ comprend un indicateur KPI de congestion, Congestion KPI, défini sur la base du nombre d'événements d'abandon de paquet sur la liaison dans les deux sens de transmission (montant ; descendant) et de la capacité de transport variable utilisée sur la liaison sur un sous-intervalle de temps de calcul comprenant le moment de l'événement d'abandon de paquet.

8. Procédé selon la revendication précédente, dans lequel, pour la définition et le calcul de l'indicateur KPI, Congestion KPI, des alarmes envoyées depuis les appareils de la liaison et reçues par le système de surveillance ($NMS_1$ ; $NMS_2$) sur ledit intervalle de temps d'analyse sélectionné sont également prises en compte.

**9.** Procédé selon la revendication 7 ou 8, **caractérisé en ce que** ledit indicateur KPI, Congestion KPI, est défini en tant que perte de paquet radio, RPL, dans lequel RPL = $\sum_i RPL(i)$,

où i = chaque sous-intervalle de calcul compris dans l'intervalle d'analyse,

RPL(i) = nombre total d'événements lors desquels un ou plusieurs paquets consécutifs reçus au niveau des interfaces d'entrée d'un appareil de transmission de la liaison et destinés à une transmission sur la liaison n'ont pas été transmis par ledit appareil, calculé lors du ième sous-intervalle de calcul qui forme l'intervalle d'analyse et dans les deux sens de la liaison (montant ; descendant), et **en ce que** :

RPL(i) est considéré comme supérieur à zéro seulement si, pour la totalité du sous-intervalle de calcul considéré et dans le sens de transmission respectif (montant ; descendant), l'appareil de transmission radio de la liaison fonctionne à sa modulation maximale.

**10.** Procédé selon la revendication précédente, **caractérisé en ce que**

- ladite évaluation de la modulation, à laquelle l'appareil de transmission TX de la liaison fonctionne sur le ième sous-intervalle de calcul et dans le sens de transmission respectif (montant ; descendant), est effectuée au moyen du compteur ACM respectif, ACM$_{uplink}$(i), ACM$_{downlink}$(i) ;
- la longueur du sous-intervalle de calcul est choisie comme étant égale à la période de mesure dudit compteur ACM, de préférence comme étant égale à 15 minutes ;
- et **en ce que** le nombre RPL est défini et calculé comme suit :

$$\text{RPL} = \sum_i RPL(i) \; : \; [\text{ACM}(i) = \text{length}[i]] =$$
$$(\sum_i RPL_{\text{uplink}}(i) \; : \; [\text{ACM}_{\text{uplink}}(i) = \text{length}[i]] +$$
$$\sum_i RPL_{\text{downlink}}(i) \; : \; [\text{ACM}_{\text{downlink}}(i) = \text{length}[i]]).$$

**11.** Procédé selon la revendication précédente, **caractérisé en ce que**, pour des liaisons radio fonctionnant sur un protocole Ethernet, lesdits compteurs sélectionnés sont le compteur EtherStatsDropEvents et le compteur ACM, et **en ce que**, pour chaque ième sous-intervalle de calcul qui forme l'intervalle d'analyse, RPL$_{uplink}$(i) et RPL$_{downlink}$(i) sont définis et calculés comme suit :

$$\text{RPL}_{\text{uplink}}(\text{i}) = \sum_j EtherStatsDropEvents(i),$$

où j = tous les points de mesure de l'appareil TX de la connexion en liaison montante et

$$\text{RPL}_{\text{downlink}}(\text{i}) = \sum_j EtherStatsDropEvents(i),$$

où j = tous les points de mesure de l'appareil TX de la connexion en liaison descendante.

**12.** Procédé selon l'une quelconque des revendications 9 à 11, **caractérisé en ce que**, pour chaque liaison reposant sur la technologie par paquets de la partie de réseau sélectionnée pour une analyse, pendant un calcul de l'indicateur KPI, Congestion KPI, RPL(i) = 0 est défini si, pendant le ième sous-intervalle de calcul, au moins une alarme provenant d'au moins un appareil de la liaison a été détectée.

**13.** Procédé selon l'une quelconque des revendications 9 à 12, dans lequel la définition et le calcul de l'indicateur KPI, Congestion KPI, consistent à définir et à calculer les paramètres supplémentaires suivants pour chaque liaison reposant sur la technologie par paquets et dans chaque sens (montant ; descendant) sur la base de données de RPL d'événements d'abandon de paquet sur la liaison pendant l'intervalle de temps d'analyse sélectionné ;

• AVG RPL = nombre moyen d'événements d'abandon de paquet sur la liaison pendant l'intervalle de temps d'analyse sélectionné, ces événements n'étant pris en compte dans le calcul que si la liaison fonctionne à la modulation maximale sur le sous-intervalle de calcul correspondant :

$$\text{AVG RPL} = \mu = \text{E} \; [\sum_i [RPL(i) : ACM(i) = length[i]],$$

• σ = écart standard de la progression d'événements d'abandon de paquet sur l'intervalle de temps sélectionné, tous étant individuellement considérés lors du calcul seulement si, sur le sous-intervalle de calcul correspondant, la liaison fonctionne à la modulation maximale :

$$\sigma = \text{STD DEV } [\sum_i \left[ RPL(i) : ACM(i) = length\ [i] \right]$$

• PEAK THRESHOLD = μ + K*σ, où K = 1, 2, 3, ..., N est un facteur de tolérance pouvant être sélectionné, de préférence égal à 1, 2 ou 3 ;
• PEAK EVENT = chaque ième sous-intervalles de calcul compris dans l'intervalle d'analyse sur lequel le nombre d'événements d'abandon de paquet RPL(i), calculé selon l'une quelconque des revendications 9 à 12, est supérieur à PEAK THRESHOLD :

$$i = \text{Peak SI } [RPL(i) \geq \mu + K*\sigma]\ ;$$

• Occurrency = chaque ième sous-intervalle compris dans l'intervalle d'analyse sélectionné, à l'intérieur duquel le nombre d'événements d'abandon de paquet RPL(i), calculé selon l'une quelconque des revendications 10 à 14, est supérieur à PEAK TRESHOLD, à moins que ceci ne soit également vrai pour le (i - 1) ième sous-intervalle :
i = Occurrency SI :

$$RPL(i) > \text{PEAK THRESHOLD ET } RPL(i - 1) \leq \text{PEAK THRESHOLD.}$$

**14.** Procédé selon la revendication précédente, **caractérisé en ce que**, pour chaque liaison reposant sur la technologie par paquets de la partie de réseau sélectionnée qui n'est pas conforme à l'indicateur KPI, Congestion KPI, l'étape de délivrance d'un résultat de l'indicateur KPI, Congestion KPI, consiste à fournir, dans le résultat détaillé, le nombre total d'événements Occurency détectés sur l'intervalle d'analyse sélectionné.

**15.** Procédé selon l'une quelconque des revendications précédentes, **caractérisé en ce que** lesdits compteurs de performance sélectionnés pour définir l'au moins un indicateur $KPI_{TDM}$ comprennent un ou plusieurs compteurs parmi un compteur de secondes erronées, ES, un compteur de secondes non disponibles, UAS, et un compteur de secondes gravement erronées, SES.

**16.** Procédé selon les revendications précédentes, **caractérisé en ce que** l'au moins un indicateur $KPI_{TDM}$ comprend un indicateur KPI d'indisponibilité, Unavailability KPI, défini et calculé sur la base d'un ou de plusieurs des compteurs ES, UAS et SES détectés au point de mesure sur l'interface de réception radio de l'appareil RX dans le sens respectif de transmission (montant ; descendant) de la liaison.

**17.** Procédé selon la revendication précédente, **caractérisé en ce que** l'indicateur KPI, Unavailability KPI, est défini en tant qu'ensemble de fonctions d'un ou de plusieurs des trois paramètres suivants, de préférence de tous ces derniers, des compteurs ES, SES et UAS :

• $\text{Quality}_{ES} = \left[ \frac{(60*60*24*30 - ES_M)}{60*60*24*30} \right] * 100$

• $\text{Quality}_{SES} = \left[ \frac{(60*60*24*30 - SES_M)}{60*60*24*30} \right] * 100$

• $\text{Quality}_{UAS} = \left[ \frac{(60*60*24*30 - UAS_M)}{60*60*24*365} \right] * 100$

où :

$ES_M$ = valeur mensuelle totale maximale du compteur ES à l'intérieur de l'intervalle d'analyse sélectionné ;
$SES_M$ = valeur mensuelle totale maximale du compteur SES à l'intérieur de l'intervalle d'analyse sélectionné ;
$UAS_M$ = valeur annuelle totale maximale du compteur UAS à l'intérieur de l'intervalle d'analyse sélectionné.

**18.** Procédé selon la revendication précédente, dans lequel, pour chaque liaison basée sur la technologie de TDM, l'étape de calcul de l'indicateur KPI, Unavailability KPI, propose un calcul du ou des paramètres définis comme $Quality_{ES}$, $Quality_{SES}$ et $Quality_{UAS}$ sur la base des données associées aux compteurs ES, SES, UAS respectifs détectées au point de mesure sur l'interface de réception radio de l'appareil RX et associées à l'intervalle d'analyse sélectionné, le calcul étant effectué dans les deux sens de transmission.

19. Procédé selon la revendication précédente, dans lequel l'étape de définition d'au moins une règle d'évaluation de la conformité de l'indicateur KPI, Unavailability KPI, propose la définition d'un seuil de disponibilité :

> Availability Threshold = points de pourcentage de disponibilité de la liaison sur l'intervalle d'analyse sélectionné, et la conversion automatique dudit seuil Availability Threshold en seuils correspondants pour le ou les paramètres définis par $Quality_{ES}$, $Quality_{SES}$ et $Quality_{UAS}$ :
>
> • $Threshold_{ES}$ = pourcentage de disponibilité sur un mois, pour les valeurs ES
> = 60*60*24*30* (100 - Availability Threshold)/100
> • $Threshold_{SES}$ = pourcentage de seuil de disponibilité sur un mois, pour les valeurs SES
> = 60*60*24*30* (100 - Availability Threshold)/100
> • $Threshold_{UAS}$ = seuil de disponibilité sur une année, pour les valeurs UAS
> = 60*60*24*30*365* (100 - Availability Threshold)/100.

20. Procédé selon la revendication précédente, dans lequel, pour chaque liaison reposant sur la technologie de TDM de la partie de réseau sélectionnée et pour chaque sens de transmission (montant ; descendant), l'étape de vérification de la conformité de l'indicateur KPI, Unavailability KPI, calculé est effectuée conformément à la règle suivante :

```
SI QualityES > ThresholdES
et/ou
SI QualitySES > ThresholdES
et/ou
SI QualityUAS > TresholdES,
```

alors : l'indicateur KPI, Unavailability KPI, calculé pour la liaison n'est pas conforme.

21. Procédé selon l'une quelconque des revendications précédentes, dans lequel lesdits compteurs de performance sélectionnés pour définir l'au moins un indicateur $KPI_{ETH}$ comprennent le compteur etherHistoryUtilization.

22. Procédé selon l'une quelconque des revendications précédentes, dans lequel l'étape de définition d'au moins un indicateur $KPI_{ETH}$ consiste à définir un indicateur KPI, Utilization KPI, défini en tant qu'utilisation moyenne de l'interface radio de l'appareil de transmission d'une liaison sur la totalité de l'intervalle d'analyse et dans les deux sens de transmission (montant ; descendant) de la liaison.

23. Procédé selon la revendication précédente, dans lequel, pour des liaisons de la partie de réseau sélectionnée fonctionnant sur un protocole Ethernet, l'indicateur KPI, Utilization KPI, est calculé sur la base d'un compteur etherHistoryUtilization détecté au niveau de l'interface radio de l'appareil de transmission de la liaison, l'indicateur KPI, Utilization KPI, étant défini en tant que somme des valeurs dudit compteur etherHistoryUtilization sur chaque période de mesure comprise dans l'intervalle d'analyse divisé par le nombre de périodes de mesure comprises dans l'analyse, et dans lequel le calcul est effectué dans les deux sens de transmission.

24. Procédé selon les revendications 21 à 23, dans lequel l'étape de définition d'au moins une règle d'évaluation de la conformité de l'indicateur KPI, Utilization KPI, propose la définition d'un seuil égal à l'utilisation maximale moyenne en points de pourcentage sur l'unique période de mesure de l'intervalle de temps d'analyse ; et dans lequel l'étape de vérification de la conformité de l'indicateur KPI, Utilization KPI, propose une comparaison entre l'indicateur KPI calculé et le seuil défini, dans chaque sens de transmission (montant ; descendant) sur lequel est calculé l'indicateur KPI, Utilization KPI.

25. Procédé selon l'une quelconque des revendications précédentes, dans lequel l'étape de définition d'au moins un indicateur $KPI_{ETH}$ propose la définition d'un indicateur KPI, Busy Hour Utilization KPI, défini en tant qu'utilisation horaire moyenne de la liaison pendant les huit heures mensuelles d'utilisation la plus intense dans les deux sens de transmission (montant ; descendant) de la liaison.

26. Procédé selon la revendication précédente, **caractérisé en ce que** cette utilisation horaire moyenne durant les huit heures mensuelles de valeur d'utilisation la plus intense est définie et calculée sur la base du compteur de performance Ethernet etherHistoryUtilization.

27. Procédé selon la revendication précédente, dans lequel, pour chaque liaison reposant sur la technologie Ethernet de la partie de réseau sélectionnée et dans chaque sens de transmission (montant ; descendant) de la liaison, le calcul de l'indicateur KPI, Busy Hour Utilization KPI, comprend les étapes suivantes consistant à :

- effectuer une moyenne sur une heure des valeurs du compteur etherHistoryUtilization associées à l'intervalle d'analyse et acquises sur l'interface radio de l'appareil TX de la liaison sur une période de mesure définie ;
- sélectionner les valeurs ayant fait l'objet du calcul de moyenne du compteur etherHistoryUtilization des huit heures mensuelles indiquant la moyenne horaire la plus élevée ;
- calculer la moyenne horaire sur les huit heures mensuelles indiquant l'utilisation horaire moyenne la plus intense ;

et dans lequel, si ledit intervalle d'analyse défini est différent sur un mois, l'étape de calcul de l'indicateur KPI, Busy Hour Utilization KPI, propose le calcul d'un nombre d'heures indiquant la moyenne horaire la plus élevée proportionnée au nombre d'heures de l'intervalle d'analyse sélectionné ;
et le calcul de l'utilisation horaire moyenne sur ledit nombre d'heures indiquant la moyenne horaire la plus élevée.

28. Procédé selon l'une quelconque des revendications 25 à 27, dans lequel l'étape de définition d'au moins une règle d'évaluation de la conformité de l'indicateur KPI, Busy Hour Utilization KPI, propose la définition d'un seuil égal à l'utilisation horaire moyenne maximale acceptable pendant les heures indiquant la moyenne horaire la plus élevée, en points de pourcentage ; et dans lequel
l'étape de vérification de la conformité de l'indicateur KPI, Busy Hour Utilization KPI, propose une comparaison entre l'indicateur KPI, Busy Hour Utilization KPI, calculé et le seuil défini, dans chaque sens de transmission (montant ; descendant) sur duquel est calculé l'indicateur KPI.

29. Procédé selon l'une quelconque des revendications précédentes, **caractérisé en ce qu'**il comprend une étape consistant à délivrer un résultat de l'analyse effectuée, sous la forme :

- d'un résultat détaillé qui comprend, pour chaque indicateur KPI défini, au moins une liste ou une table pouvant être consultée par l'utilisateur et dans laquelle sont identifiées toutes les liaisons qui ne sont pas conformes audit indicateur KPI ;
- d'un résultat global de la partie de réseau analysée qui indique, pour chaque indicateur KPI défini, le pourcentage de liaisons analysées qui ne sont pas conformes à l'indicateur KPI défini.

30. Procédé selon la revendication précédente, dans lequel l'étape de délivrance d'un résultat de l'analyse effectuée consiste également à afficher la progression dans chaque sens de transmission (descendant et montant) sur l'intervalle d'analyse d'un ou de plusieurs compteurs utilisés pour la définition et le calcul de l'au moins un indicateur $KPI_{TDM}$, $KPI_{ETH}$, on préfère de tous lesdits compteurs.

31. Procédé selon l'une quelconque des revendications précédentes, **caractérisé en ce qu'**il comprend une étape consistant à prédire la tendance future de performance d'au moins une liaison de la partie de réseau sélectionnée, exécutée par une projection de la progression tendancielle d'un ou de plusieurs indicateurs KPI calculés pour la liaison, de préférence au moyen d'une technique d'interpolation de données, plus préférentiellement au moyen d'une régression linéaire.

32. Procédé selon l'une quelconque des revendications précédentes, dans lequel l'au moins un indicateur $KPI_{ETH}$ défini est également calculé pour au moins une liaison à fibre optique de la partie de réseau sélectionnée, en supposant que la capacité de transport variable de la liaison soit toujours maximale.

33. Système (3000) de surveillance et d'analyse d'un réseau de transport de télécommunications, le réseau de transport comprenant :

- au moins une liaison radio bidirectionnelle poste à poste composée de deux appareils émetteurs-récepteurs radio, chaque appareil :

-- étant identifié de manière unique dans le réseau par un identifiant respectif ;
-- fonctionnant en faisant appel à une technologie de multiplexage temporel, TDM, ou une technologie de transport par paquets, et
-- comportant des interfaces d'E/S respectives au niveau desquelles sont présents des points de mesure permettant d'acquérir des données de performance, et
-- comportant des compteurs de performance permettant de sauvegarder les données acquises ;

- au moins un système ($NMS_1$ ; $NMS_2$) destiné à surveiller les appareils émetteurs-récepteurs du réseau de transport ;

dans lequel les appareils émetteurs-récepteurs de chaque liaison radio du réseau sont associés à l'un dudit au moins un système de surveillance ($NMS_1$ ; $NMS_2$) des appareils émetteurs-récepteurs du réseau de transport, et dans lequel chaque système de surveillance ($NMS_1$ ; $NMS_2$) est pourvu d'une base de données permettant de sauvegarder les données de compteurs de performance acquises par les appareils auxquels est associé le système de surveillance ;
le système (3000) destiné à surveiller et à analyser le réseau de transport de télécommunications comprenant :

- une unité de traitement associée à au moins une mémoire apte à sauvegarder des règles permettant de :
- définir au moins un indicateur de performance clé, $KPI_{TDM}$, des liaisons reposant sur la technologie de TDM, chaque indicateur $KPI_{TDM}$ étant défini sur la base d'un nombre prédéfini de compteurs de performance sélectionnés parmi les compteurs de performance des appareils émetteurs-récepteurs de la liaison respective sauvegardés et mémorisés dans la base de données du système de surveillance respectif ($NMS_1$ ; $NMS_2$) ;
- définir au moins un indicateur de performance clé, $KPI_{ETH}$, des liaisons reposant sur la technologie par paquets, chaque indicateur $KPI_{ETH}$ étant défini sur la base d'un nombre prédéfini de compteurs de performance sélectionnés parmi les compteurs de performance des appareils émetteurs-récepteurs de la liaison respective, sauvegardés et mémorisés dans la base de données du système de surveillance respectif ($NMS_1$ ; $NMS_2$) ;
- évaluer la conformité de chaque liaison d'une partie de réseau à analyser à l'au moins un indicateur de performance clé KPI correspondant défini ;

l'unité de traitement étant connectée à :

- une base de données d'analyse (3001) apte à être remplie/mise à jour au moyen de données téléchargées depuis les bases de données des systèmes de surveillance ($NMS_1$ ; $NMS_2$) du réseau de transport et associées aux compteurs sur la base desquels sont définis l'au moins un indicateur $KPI_{TDM}$ et l'au moins un indicateur $KPI_{ETH}$ ;
- au moins un module permettant un interfaçage avec le réseau de transport (NETWORK INTERFACE) configuré pour une liaison avec l'au moins un système de surveillance de réseau, NMS, du réseau de transport pour télécharger les données de remplissage/de mise à jour de la base de données d'analyse et pour recevoir les alarmes associées au réseau de transport ;
- au moins une interface utilisateur, configurée pour permettre la définition et/ou le choix, par un utilisateur, des règles d'évaluation de conformité et :

- d'au moins une partie du réseau de transport d'intérêt pour l'analyse et comprenant au moins une liaison radio ; et
- d'un intervalle de temps d'analyse de la partie sélectionnée du réseau de transport ;

l'unité de traitement étant configurée pour ordonner la mise à jour, au moins jusqu'à l'intervalle de temps d'analyse sélectionné compris, de la base de données d'analyse au moyen des données provenant de la ou des bases de données de l'au moins un système ($NMS_1$ ; $NMS_2$) destiné à surveiller les appareils du réseau de transport ;

- calculer, pour chaque liaison reposant sur la technologie de TDM appartenant à la partie de réseau de transport sélectionnée, l'au moins un indicateur $KPI_{TDM}$ défini, sur la base des données contenues dans la base de données d'analyse et associées auxdits compteurs sélectionnés des appareils de la liaison ;
- calculer, pour chaque liaison reposant sur la technologie par paquets appartenant à la partie de réseau de transport sélectionnée, l'au moins un indicateur $KPI_{ETH}$ défini, sur la base des données contenues dans la base de données d'analyse et associées auxdits compteurs sélectionnés des appareils de la liaison ;
- vérifier, pour chaque liaison de la partie de réseau sélectionnée, la conformité de l'au moins un indicateur KPI calculé pour la liaison, conformément à ladite au moins une règle d'évaluation définie.

Fig.1

ACCESS NETWORK

TRANSPORT NETWORK

Downlink

Uplink

Radio apparatus of transport network

Apparatus belonging to the access network

Apparatus for optical-fibre links

Optical fibre link (optical-fibre transport network)

Radio link

Cable link

Management channel

BACKBONE

NMS₁

NMS₂

NMS₃

3000

100

110

130

210

EP 2 928 119 B1

36

*Fig.2*

NMS₁
DB NMS₁

NMS₂
DB NMS₂

NMS₃
DB NMS₃

*210*

*210*

NETWORK INTERFACE ↔ CPU ↔ USER INTERFACE

DATABASE

*3000*

*3001*

*Fig.3*

# Radio Packet Loss

Peak

Not a peak

Occurency = 1

$\mu + K * \sigma$

$K * \sigma$

$\mu$

$t_{i-1}$ $t_i$

i=1

Time

*Fig.4a*

Result    Tot link    Map

**Unavailability**    **Congestion**    **Utilization**    **Busy Hour**

1 %        8 %        8 %        11 %

EP 2 928 119 B1

PM Analysi ▾ | Inventory | Match | Statistics | Command ▾ | Link search | Admin ▾ | Logout

**Selection 2**

Result | Tot Link Err | Map | Statistic | Utilization

| Link | Description cause | Equipment A | | | | Equipment B | | | | Collected data |
|---|---|---|---|---|---|---|---|---|---|---|
| | | Station | Label | IP Address | Type | Station | Label | IP Address | Type | |
| RadioLink_AQ2305 | Utilization Up = 41 % | Station_5479 | Equipment_1 | 10.126.255.5 | ALCplus2 | Station_5483 | Equipment_1 | 10.126.255.8 | ALCplus2 | 100.00% |
| RadioLink_AQ0697 | Utilization Up = 39 % | Station_5864 | Equipment_1 | 10.125.18.221 | ALCplus2 | Station_7834 | Equipment_2 | 10.125.18.223 | ALCplus2 | 100.00% |
| RadioLink_AP1983 | Utilization Down = 38 % | Station_6074 | Equipment_4 | 10.125.29.67 | ALCplus2e | Station_3887 | Equipment_3 | 10.125.29.69 | ALCplus2e | 100.00% |
| RadioLink_AP4861 | Utilization Down = 32 % | Station_5503 | Equipment_9 | 10.126.203.225 | ALCplus2 | Station_5792 | Equipment_1 | 10.126.203.227 | ALCplus2 | 100.00% |
| RadioLink_AQ1515 | Utilization Down = 31 % | Station_5641 | Equipment_1 | 10.126.253.175 | ALCplus2 | Station_8308 | Equipment_1 | 10.126.253.177 | ALCplus2 | 100.00% |
| RadioLink_BP4073 | Utilization Down = 29 % | Station_3134 | Equipment_8 | 10.126.120.152 | ALCplus2 | Station_4334 | Equipment_1 | 10.126.96.31 | ALCplus2 | 100.00% |
| RadioLink_AQ4541 | Utilization Down = 27 % | Station_8777 | Equipment_4 | 10.125.29.111 | ALCplus2e | Station_8850 | Equipment_7 | 10.125.29.113 | ALCplus2e | 100.00% |
| RadioLink_BP8369 | Utilization Up = 27 % | Station_1351 | Equipment_1 | 10.126.81.95 | ALCplus2 | Station_3646 | Equipment_3 | 10.126.83.78 | ALCplus2 | 100.00% |
| RadioLink_AP1987 | Utilization Down = 26 % | Station_3887 | Equipment_4 | 10.125.29.71 | ALCplus2e | Station_4208 | Equipment_3 | 10.125.29.73 | ALCplus2e | 100.00% |
| RadioLink_AQ3097 | Utilization Up = 25 % | Station_8391 | Equipment_1 | 10.125.3.226 | ALCplus2 | Station_4187 | Equipment_3 | 10.125.3.228 | ALCplus2 | 100.00% |
| RadioLink_AQ0511 | Utilization Down = 24 % | Station_8839 | Equipment_1 | 10.126.238.49 | ALCplus2 | Station_7741 | Equipment_1 | 10.126.238.52 | ALCplus2 | 100.00% |
| RadioLink_AQ4461 | Utilization Up = 24 % | Station_3895 | Equipment_6 | 10.125.25.162 | ALCplus2 | Station_5033 | Equipment_3 | 10.125.25.164 | ALCplus2 | 100.00% |
| RadioLink_AQ2185 | Utilization Up = 22 % | Station_8571 | Equipment_1 | 10.126.252.156 | ALCplus2 | Station_8446 | Equipment_2 | 10.126.252.158 | ALCplus2 | 100.00% |
| RadioLink_AP4575 | Utilization Down = 21 % | Station_3900 | Equipment_1 | 10.126.198.163 | ALCplus2 | Station_7398 | Equipment_2 | 10.126.198.166 | ALCplus2 | 90.00% |

*Fig.4b*

**Selection 2**

Result | Tot Link Err | Map | Statistic | Utilization

show map setting

Clusters Grid Size

☐ Abilita cluster

View link
○ No one
◉ All
○ Error

☑ View Station

☑ View Label

Mappa | Satellite

RadioLink_AP8317 ✕
8.81 Km
Unavailability -
Congestion -
Utilization -
Busy hour -
[ Open Link ]

*Fig.4e*

# Fig.4c

# Fig.4d

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014008915 A

- WO 0189141 A2

**Non-patent literature cited in the description**

- **MR V M MINKIN CHAIRPERSON.** *Recommendations F. 750-4 and F. 1332-1 from ITU-R SG9; TD 6*